# EUROPEAN PATENT APPLICATION

(11) **EP 4 132 155 A1**
(43) Date of publication of application: **08.02.2023**
(21) Application number: 20934865.5
(22) Date of filing: 07.05.2020
(51) Int. Cl.: H04W 72/04, H04L 5/00

(54) **METHOD AND APPARATUS FOR SUPPORTING TRANSMISSION OF HYBRID AUTOMATIC REPEAT REQUEST ACKNOWLEDGEMENT FEEDBACK INFORMATION OF MULTICAST SERVICE**

(71) Applicant: Huawei Technologies Co., Ltd., Shenzhen, Guangdong 518129 (CN)
(72) Inventor: HU, Dan, Shenzhen, Guangdong 518129 (CN); GUAN, Lei, Shenzhen, Guangdong 518129 (CN); LI, Shengyu, Shenzhen, Guangdong 518129 (CN)
(74) Representative: Isarpatent
(86) International application number: PCT/CN2020/088978
(87) International publication number: WO 2021/223153

(57) **Abstract**

A method for transmitting automatic repeat request acknowledgement feedback information supporting a multicast service and an apparatus are provided. The method includes: receiving N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel; receiving N first downlink data channels and M second downlink data channels in at least one second time unit; generating a codebook of automatic repeat request acknowledgement HARQ-ACK feedback information; and sending the codebook in a third time unit.

## Description

### TECHNICAL FIELD

The present invention relates to the field of communication technologies, and in particular, to a method for transmitting automatic repeat request acknowledgement feedback information supporting a multicast service and an apparatus.

### BACKGROUND

The International Telecommunication Union (International Telecommunication Union, ITU) defines three major types of application scenarios for 5G and future mobile communication systems: enhanced mobile broadband (enhanced mobile broadband, eMBB), ultra-reliable and low-latency communications (ultra-reliable and low-latency communications, URLLC), and massive machine-type communications (massive machine-type communications, mMTC). Typical eMBB services include an ultra high-definition video, augmented reality (augmented reality, AR), virtual reality (virtual reality, VR), and the like. These services are mainly characterized by a large data transmission amount and a very high transmission rate. Typical URLLC services include wireless control in an industrial manufacturing or production process, motion control of a driverless car and a drone, and tactile interactive applications such as remote repair and remote surgery. These services are mainly characterized by ultra-high reliability, a low latency, a small data transmission amount, and burstiness. Typical mMTC services include power distribution automation of a smart grid, a smart city, and the like, and are mainly characterized by a large quantity of network-connected devices, a small data transmission amount, and insensitivity of data to a transmission latency. These mMTC terminals need to satisfy requirements for low costs and very long standby duration.

Research on radio broadcast/multicast services has never stopped in recent years. A large quantity of mobile data multimedia services, various high-bandwidth multimedia services (for example, an interactive personality television IPTV and a mobile television), and high-robustness and important communication services (for example, group communication in disaster situations and a public safety network) impose higher requirements on the broadcast/multicast services. These mobile data multimedia services require a plurality of users to simultaneously receive same data. Compared with common data services, these services are characterized by a large data amount, long duration, sensitivity to a latency, and the like.

The 3rd Generation Partnership Project (3rd Generation Partnership Project, 3GPP) provides a requirement for a multimedia broadcast multicast service (Multimedia Broadcast Multicast Service, MBMS). This service can provide multicast/broadcast services in a cellular system. Multicast/broadcast is a technology for transmitting data from one data source to a plurality of target mobile terminals, to implement resource sharing between a core network and an access network and improve utilization of network resources (especially air interface resources). The MBMS defined in the 3GPP can implement low-rate plain-text message groupcast and broadcast, and implement high-speed multimedia service broadcast and groupcast, to provide various video, audio, and multimedia services. Characteristics of broadcast services enable better efficiency in sending information of public interest, and this undoubtedly conforms to a trend of mobile data development in the future and provides a better business prospect for the development of communication technologies.

Existing 5G new radio (New Radio, NR) supports unicast service transmission with an automatic repeat request (hybrid automatic repeat request, HARQ) mechanism. In a process of the unicast service transmission that supports the HARQ mechanism, a network device (gNB) sends a physical downlink control channel (physical downlink control channel, PDCCH) to user equipment (User Equipment, UE), to schedule transmission of a physical downlink data channel (physical downlink shared channel, PDSCH). After receiving the PDSCH, the UE needs to send automatic repeat request acknowledgement HARQ-ACK feedback information to the gNB, to notify the gNB of a receiving status of the UE for the PDSCH. The HARQ-ACK feedback information is carried on a PUCCH or a PUSCH. If the UE correctly receives the PDSCH, the UE sends an acknowledgement (acknowledgement, ACK) to the gNB, and the gNB may schedule new data transmission after receiving the ACK. If the UE fails to correctly receive the PDSCH, the UE sends a negative acknowledgement (negative acknowledgement, NACK) to the gNB, and the gNB may schedule retransmission of the PDSCH after receiving the NACK.

For example, the HARQ-ACK feedback information is sent on the PUCCH. Before sending the HARQ-ACK feedback information, the UE further needs to determine a PUCCH resource carrying the HARQ-ACK. The UE receives a PDSCH-to-HARQ feedback timing indicator (PDSCH-to-HARQ feedback timing indicator, K1), where the indicator may be carried in downlink control information DCI or configured by using a higher layer parameter. The indication information indicates a time unit offset between a PDSCH and a HARQ. For example, a time unit may be a slot. After determining a time unit carrying HARQ transmission, the UE selects a PUCCH resource set based on a payload size of the HARQ-ACK in the time unit. The payload size is a quantity of pieces of HARQ-ACK feedback information that need to be fed back in the time unit.

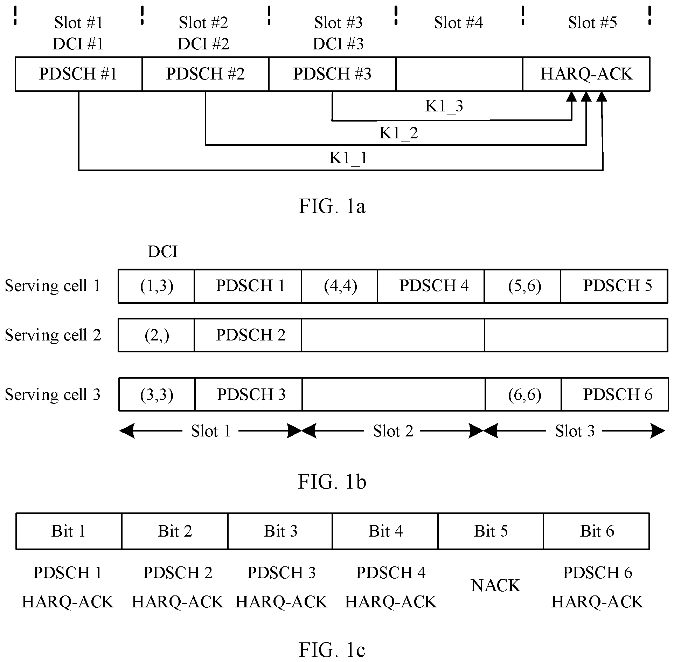

As shown in FIG. 1a, the following uses a simple example for description. The gNB schedules, by using DCI #1 in a slot #1, transmission of a PDSCH #1, and a HARQ feedback timing indicator K1_1 in the DCI #1 indicates that HARQ-ACK feedback is performed in a slot that is offset from the slot #1 by four slots. Similarly, the gNB schedules, by using DCI #2 in a slot #2, transmission of a PDSCH #2, and a HARQ feedback timing indicator K1_2 in the DCI #2 indicates that HARQ-ACK feedback is performed in a slot that is offset from the slot #2 by three slots. The gNB schedules, by using DCI #3 in a slot #3, transmission of a PDSCH #3, and a HARQ feedback timing indicator K1_3 in the DCI #3 indicates that HARQ-ACK feedback is performed in a slot that is offset from the slot #3 by two slots. Therefore, HARQ-ACK feedback information for the PDSCH #1, the PDSCH #2, and the PDSCH #3 needs to be fed back in a slot #5. In other words, in the slot #5, the UE needs to feed back 1-bit HARQ-ACK feedback information for each of the PDSCH #1, the PDSCH #2, and the PDSCH #3, that is, feed back 3-bit HARQ-ACK feedback information in total.

However, if one of the foregoing three pieces of DCI for scheduling the PDSCHs is not successfully received by the UE, a corresponding PDSCH is not received either. Because the UE considers that only two scheduled PDSCHs are transmitted, the UE feeds back only 2-bit HARQ-ACK feedback information. However, the gNB does not know a specific piece of DCI that is not successfully received by the UE, and does not know two specific PDSCHs that correspond to the 2-bit HARQ-ACK feedback information fed back by the UE. Consequently, a HARQ feedback error is finally caused. In an existing 5G NR standard, a dynamic codebook mechanism is used for resolving the foregoing problem.

In the dynamic codebook mechanism, downlink scheduling information includes a downlink assignment index (Downlink assignment index) DAI. The DAI field includes two parts: a counter DAI (counter DAI) C-DAI and a total DAI (total DAI) T-DAI. The C-DAI indicates, up to a current serving cell and a current PDCCH monitoring occasion, an accumulative quantity of pieces of sent DCI for scheduling transmission of a PDSCH and sent DCI for indicating a semi-persistent scheduling SPS PDSCH release. A counting rule of the C-DAI is first counting based on a serving cell dimension (for example, in ascending order of serving cell indexes), and then counting based on a time dimension (for example, in ascending order of PDCCH monitoring occasions). The T-DAI indicates, up to the current PDCCH monitoring occasion, an accumulative quantity of pieces of sent DCI for scheduling the transmission of the PDSCH and sent DCI for indicating the semi-persistent scheduling SPS PDSCH release. Therefore, a value of the T-DAI varies with time. Fallback DCI (for example, a DCI format 1_0) may have only DAI count information. Non-fallback DCI (for example, DCI formats 1_1 and 1-2) may have both the DAI count information and the total DAI, or may have only the DAI count information. The UE generates a dynamic codebook of HARQ-ACK feedback information based on the C-DAI and the T-DAI in the DCI.

As shown in FIG. 1b, for example, starting from a slot 1, in the slot 1, the gNB respectively sends, in a serving cell 1, a serving cell 2, and a serving cell 3, DCI 1, DCI 2, and DCI 3 for scheduling transmission of a PDSCH 1 to a PDSCH 3, and it is assumed that the DCI 1 and the DCI 3 sent in the serving cells 1 and 3 are non-fallback DCI, and the DCI 2 sent in the serving cell 2 is fallback DCI. Because the counting rule of the C-DAI is first counting based on the serving cell dimension, that is, in ascending order of the serving cell indexes, a value of a C-DAI in the DCI 1 is 1, a value of a C-DAI in the DCI 2 is 2, and a value of a C-DAI in the DCI 3 is 3. In the current slot 1, an accumulative quantity of pieces of sent DCI for scheduling transmission of a PDSCH is 3, and values of T-DAIs in the DCI 1 and the DCI 3 are both 3. Because the DCI 2 is fallback DCI, only the C-DAI field is included, and the T-DAI field is not included. In a slot 2, the gNB sends, only in the serving cell 1, DCI 4 for scheduling transmission of a PDSCH 4. According to the foregoing rule, a value of a C-DAI in the DCI 4 is 4, and a value of a T-DAI is 4. In a slot 3, the gNB sends, in the serving cell 1, DCI 5 for scheduling transmission of a PDSCH 5, and sends, in the serving cell 3, DCI 6 for scheduling a PDSCH 6. According to the foregoing rule, a value of a C-DAI in the DCI 5 is 5, a value of a C-DAI in the DCI 6 is 6, and values of T-DAIs are 6. It should be noted that, for example, a prerequisite for accumulative counting of a C-DAI and a T-DAI in one piece of DCI and those of at least one piece of previous DCI may be: For a PDSCH scheduled by using the DCI and a PDSCH scheduled by using the at least one piece of previous DCI, HARQ-ACK feedback needs to be performed in a same slot.

A dynamic codebook includes HARQ-ACK information for X PDSCHs, where X is a value of a largest T-DAI in T-DAIs of a plurality of pieces of DCI that are for scheduling transmission of PDSCHs and for which HARQ-ACK feedback needs to be performed in a same slot. HARQ-ACK feedback information for a PDSCH scheduled by using a piece of DCI is arranged at a Y^{th} position in the dynamic codebook, where Y is equal to a value of a C-DAI in the DCI. After arranging HARQ-ACK information corresponding to data scheduled by using all monitored DCI, the UE fills a NACK in a remaining position that is in the dynamic codebook and that is not filled with the HARQ-ACK information. After receiving the dynamic codebook, the gNB learns that the PDSCH 5 is not successfully received by the UE or the DCI for scheduling the transmission of the PDSCH 5 is not successfully received by the UE.

As shown in FIG. 1c, for the transmission of the PDSCH in FIG. 1b, a dynamic codebook shown in FIG. 1c is formed. Because there are a total of six PDSCHs for which HARQ-ACK feedback needs to be performed in a same slot, and a value of a largest T-DAI is 6, the dynamic codebook has a total of six bits. HARQ-ACK feedback information for PDSCHs 1 to 6 is correspondingly located in bits 1 to 6 of the dynamic codebook. Assuming that DCI for scheduling transmission of the PDSCH 5 is not monitored by the UE, the UE feeds back a NACK in the bit 5. In this way, the gNB retransmits information about the PDSCH 5 to the UE in subsequent transmission.

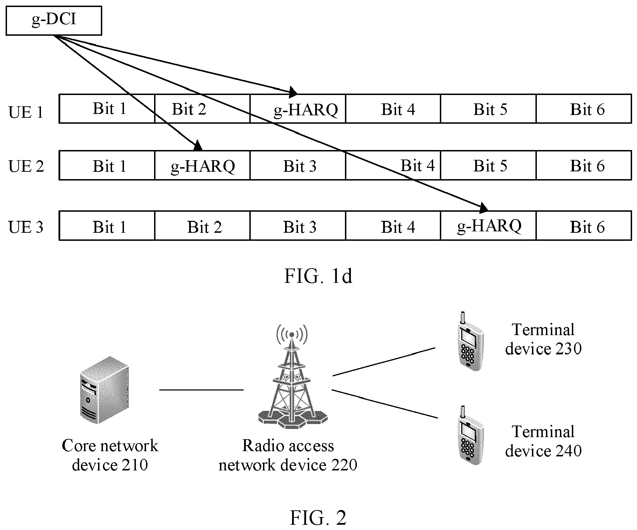

However, currently, there is no similar HARQ-ACK feedback mechanism for a multicast transmission mode. It is assumed that a dynamic codebook mechanism in unicast transmission is used in a multicast transmission scenario. As shown in FIG. 1d, to implement a multicast service, the gNB needs to send multicast DCI (namely, g-DCI) to a plurality of UEs (for example, UE 1 to UE 3 shown in the figure) in a same slot to schedule transmission of a PDSCH. However, because unicast PDSCHs previously received by all the UEs have different conditions, for different UEs, bits of multicast PDSCHs in the dynamic codebook are also different. Therefore, for all the UEs, DAI values in the g-DCI are different, and the gNB cannot effectively set the DAI values. Consequently, reliability of HARQ-ACK feedback information corresponding to the multicast PDSCHs cannot be ensured.

### SUMMARY

Embodiments of the present invention provide a method for transmitting automatic repeat request acknowledgement feedback information supporting a multicast service and an apparatus.

A first aspect of embodiments of the present invention provides a method for transmitting automatic repeat request acknowledgement feedback information supporting a multicast service. The method includes:
receiving N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel;
receiving N first downlink data channels and M second downlink data channels in at least one second time unit, where the N first downlink data channels are scheduled by using the N pieces of first downlink control information, and the M second downlink data channels are scheduled by using the M pieces of second downlink control information;
generating a codebook of automatic repeat request acknowledgement HARQ-ACK feedback information based on the first DAIs in the N pieces of first DCI, the second DAIs in the M pieces of second DCI, the N first downlink data channels, and the M second downlink data channels, where the codebook includes a first sub-codebook and a second sub-codebook, the first sub-codebook includes ARQ-ACK feedback information for the N first downlink data channels, and the second sub-codebook includes HARQ-ACK feedback information for the M second downlink data channels; and
sending the codebook in a third time unit.

A second aspect of embodiments of the present invention provides a method for transmitting automatic repeat request acknowledgement feedback information supporting a multicast service. The method includes:
sending N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel;
sending N first downlink data channels and M second downlink data channels in at least one second time unit, where the N first downlink data channels are scheduled by using the N pieces of first downlink control information, and the M second downlink data channels are scheduled by using the M pieces of second downlink control information; and
receiving a codebook of automatic repeat request acknowledgement HARQ-ACK feedback information in a third time unit, where the codebook includes a first sub-codebook and a second sub-codebook, the first sub-codebook includes HARQ-ACK feedback information for the N first downlink data channels, and the second sub-codebook includes HARQ-ACK feedback information for the M second downlink data channels.

A third aspect of embodiments of the present invention provides a communication apparatus. The communication apparatus includes a transceiver module and a processing module.

The transceiver module is configured to receive N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel.

The transceiver module is further configured to receive N first downlink data channels and M second downlink data channels in at least one second time unit, where the N first downlink data channels are scheduled by using the N pieces of first downlink control information, and the M second downlink data channels are scheduled by using the M pieces of second downlink control information.

The processing module is configured to generate a codebook of automatic repeat request acknowledgement HARQ-ACK feedback information based on the first DAIs in the N pieces of first DCI, the second DAIs in the M pieces of second DCI, the N first downlink data channels, and the M second downlink data channels, where the codebook includes a first sub-codebook and a second sub-codebook, the first sub-codebook includes ARQ-ACK feedback information for the N first downlink data channels, and the second sub-codebook includes HARQ-ACK feedback information for the M second downlink data channels.

The transceiver module is further configured to send the codebook in a third time unit.

A fourth aspect of embodiments of the present invention provides a communication apparatus. The communication apparatus includes a processing module and a transceiver module.

The transceiver module is configured to send N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel.

The transceiver module is further configured to send N first downlink data channels and M second downlink data channels in at least one second time unit, where the N first downlink data channels are scheduled by using the N pieces of first downlink control information, and the M second downlink data channels are scheduled by using the M pieces of second downlink control information.

The transceiver module is further configured to receive a codebook of automatic repeat request acknowledgement HARQ-ACK feedback information in a third time unit.

The processing module is configured to determine the HARQ-ACK feedback information from the codebook, where the codebook includes a first sub-codebook and a second sub-codebook, the first sub-codebook includes HARQ-ACK feedback information for the N first downlink data channels, and the second sub-codebook includes HARQ-ACK feedback information for the M second downlink data channels.

In embodiments of the present invention, accumulative counting is separately performed on the first C-DAI and the second C-DAI, so that C-DAI values can be correctly and appropriately set for unicast and multicast services, and a data receive end can generate HARQ-ACK feedback information for the unicast and multicast services based on the first C-DAI and the second C-DAI, to ensure reliability of HARQ-ACK feedback information corresponding to multicast downlink data channels.

### BRIEF DESCRIPTION OF DRAWINGS

To describe technical solutions in embodiments of the present invention or in a conventional technology more clearly, the following briefly describes the accompanying drawings for describing embodiments. It is clear that the accompanying drawings in the following descriptions show merely some embodiments of the present invention, and a person of ordinary skill in the art may still derive other drawings from these accompanying drawings without creative efforts.
FIG. 1a is a schematic diagram of a HARQ-ACK feedback manner in a conventional unicast service;
FIG. 1b is a schematic diagram of performing HARQ-ACK feedback by using a dynamic codebook in a conventional unicast service;
FIG. 1c is a schematic diagram of a structure of the dynamic codebook used in FIG. 1b;
FIG. 1d is a schematic diagram of an assumed scenario of performing HARQ-ACK feedback by using a dynamic codebook in a multicast service;
FIG. 2 is a schematic diagram of an architecture of a mobile communication system to which an embodiment of this application is applied;
FIG. 3 is a schematic diagram of a method for transmitting automatic repeat request acknowledgement feedback information supporting a multicast service according to an embodiment of the present invention;
FIG. 4 is a schematic diagram of DCI and downlink data channels that are listed in FIG. 3 and that are sent to a terminal device 32;
FIG. 5 is a schematic diagram of examples of DAIs included in the DCI in FIG. 4;
FIG. 6 is a schematic diagram of generating a corresponding codebook by a terminal device in the case of sending the DCI shown in FIG. 4 and FIG. 5;
FIG. 7 is a schematic block diagram of a communication apparatus 1100 according to an embodiment of this application; and
FIG. 8 is a schematic block diagram of a communication apparatus 2100 according to an embodiment of this application.

### DESCRIPTION OF EMBODIMENTS

The following clearly and completely describes technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

FIG. 2 is a schematic diagram of an architecture of a mobile communication system to which an embodiment of this application is applied. As shown in FIG. 2, the mobile communication system includes a core network device 210, a radio access network device 220, and at least one terminal device (for example, a terminal device 230 and a terminal device 240 in FIG. 2). The terminal device is connected to the radio access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or a part of functions of the core network device and a part of functions of the radio access network device may be integrated into one physical device. The terminal device may be located at a fixed position, or may be mobile. FIG. 2 is merely a schematic diagram, and the communication system may further include other network devices, for example, may further include a wireless relay device and a wireless backhaul device that are not drawn in FIG. 2. Quantities of core network devices, radio access network devices, and terminal devices included in the mobile communication system are not limited in embodiments of this application.

The radio access network device in embodiments of this application is a device that is in a network system and that is wirelessly connected to the terminal device through an air interface (Air Interface) to enable the terminal device to access the network device through the air interface. The radio access network device may be specifically a base station NodeB, an evolved NodeB (evolved NodeB, eNB), a transmission reception point (transmission reception point, TRP), a next generation base station (next generation NodeB, gNB) in a 5G mobile communication system, a base station in a future mobile communication system, or an access node in a Wi-Fi system. A specific technology and a specific device form that are used by the radio access network device are not limited in embodiments of this application.

The terminal device in embodiments of this application is an information processing apparatus with a wireless communication function. The terminal device may also be referred to as a terminal Terminal, user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

The radio access network device and the terminal device may be deployed on land, including indoor or outdoor devices, handheld devices, or vehicle-mounted devices; may be deployed on the water; or may be deployed on an airplane, a drone, a balloon, and a satellite in the air. Application scenarios of the radio access network device and the terminal device are not limited in embodiments of this application.

The term " and/or" in this specification describes only an association relationship for describing associated objects and indicates that three relationships may exist. For example, A and/or B may indicate the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are intended to distinguish between different target objects, but do not indicate a particular order of the target objects.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of embodiments of this application, unless otherwise stated, " a plurality of" means two or more than two. For example, a plurality of processing units refer to two or more processing units, and a plurality of systems refer to two or more systems.

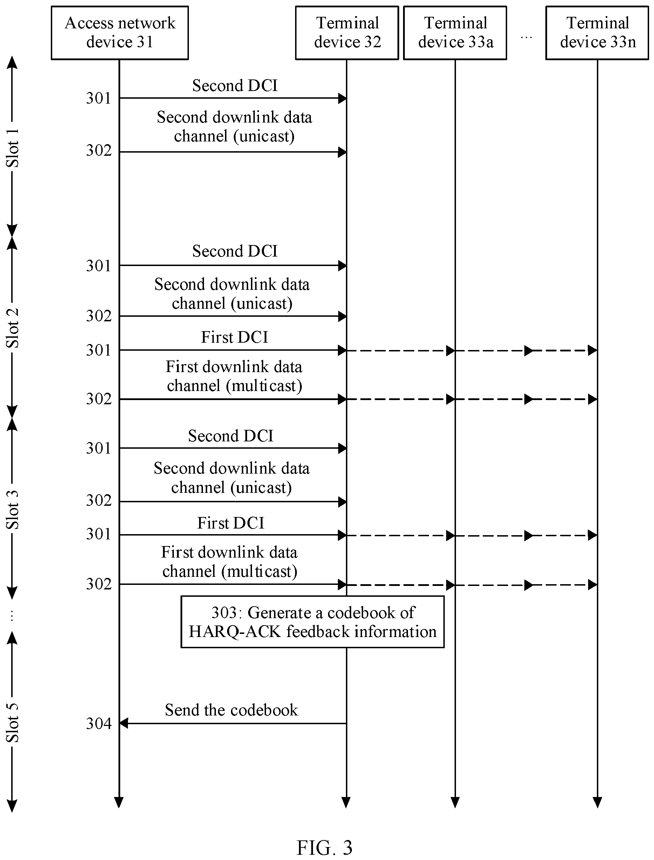

FIG. 3 is a schematic flowchart of a method for transmitting automatic repeat request acknowledgement feedback information supporting a multicast service according to an embodiment of this application. The following describes the method in detail with reference to accompanying drawings.

301: An access network device sends N pieces of first downlink control information DCI and M pieces of second DCI. Accordingly, a terminal device receives the N pieces of first downlink control information DCI and the M pieces of second DCI.

302: The access network device sends N first downlink data channels and M second downlink data channels. Accordingly, the terminal device receives the N first downlink data channels and the M second downlink data channels, where the N first downlink data channels are scheduled by using the N pieces of first downlink control information, and the M second downlink data channels are scheduled by using the M pieces of second downlink control information.

### Types of the first DCI and the second DCI

The first DCI is first-type DCI, and the second DCI is second-type DCI.

The types of the DCI may be distinguished based on identifiers used for scrambling cyclic redundancy check bits CRC of the DCI. For example, the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI.

The types of the DCI may be distinguished based on types of services scheduled by using the DCI or scheduling manners. For example, the first-type DCI is DCI for scheduling transmission of a multicast service, and the second-type DCI is DCI for scheduling transmission of a unicast service.

The types of the DCI may be distinguished based on locations/areas at which/in which the DCI is sent or searched. For example, the first-type DCI is sent in a first search space, and the second-type DCI is sent in a second search space different from the first search space. For another example, the first-type DCI is sent in a common search space, and the second-type DCI is sent in a UE-specific search space. The first-type DCI is sent in a first control channel resource set, and the second-type DCI is sent in a second control channel resource set.

It should be noted that the foregoing classification manners of the types of the DCI may exist alone, or a plurality of classification manners may coexist and correspond to or be associated with each other. For example, the first-type DCI is DCI for scheduling transmission of a multicast service, and the second-type DCI is DCI for scheduling transmission of a unicast service. In this case, the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI. In this case, the first-type DCI for the multicast service may be arranged to be sent in a common search space, and the second-type DCI for the unicast service may be arranged to be sent in a UE-specific search space. Alternatively, similarly, the first-type DCI is sent in a first control channel resource set, and the second-type DCI is sent in a second control channel resource set.

### Time sequence relationship

Step 301 and step 302 do not have a strict sequence, that is, step 302 is not necessarily performed after step 301 is completely performed. A time sequence relationship between step 301 and step 302 may be a parallel relationship, a partially parallel relationship, or an interleaving relationship.

Specifically, the N pieces of first downlink control information DCI and the M pieces of second DCI are received in at least one first time unit, and the N first downlink data channels and the M second downlink data channels are received in at least one second time unit. The at least one first time unit and the at least one second time unit may not overlap at all, may partially overlap, or may be completely the same (that is, completely overlap). The time unit in implementations of this application may be a slot (Slot), a mini-slot (mini-slot), or another time length including a plurality of time-domain symbols.

For example, as shown in FIG. 3, in a slot 1, an access network device 31 sends second DCI to a terminal device 32 in a first serving cell. Because the second DCI is for scheduling transmission of a unicast service, user equipments 33a to 33n do not receive the second DCI. Then, the terminal device 32 receives a second downlink data channel scheduled by using the second DCI for transmission. It should be understood that only one serving cell is used as an example for description above. When there are a plurality of serving cells, for example, three serving cells, between the access network device 31 and the terminal device 32, DCI sending and data channel transmission may be simultaneously performed in the three serving cells.

In a slot 2, for example, the access network device 31 sends first DCI to the terminal device 32 and the plurality of other terminal devices 33a to 33n in a second serving cell and a third serving cell. Because the first DCI is for scheduling transmission of a multicast service, the first DCI is sent to the plurality of terminal devices 32 and 33a to 33n. The first DCI schedules transmission of a first downlink data channel in the slot 2, the first downlink data channel carries the multicast service, and the plurality of terminal devices 32 and 33a to 33n receive the first downlink data channel in both the second serving cell and the third serving cell. In the slot 2, for example, the access network device 31 may further send the second DCI to the terminal device 32 in the first serving cell, to schedule the transmission of the unicast service. A process is similar to that described in the slot 1, and details are not described again.

Similarly, in a slot 3, for example, the access network device 31 may send the first DCI to the terminal device 32 and the plurality of other terminal devices 33a to 33n in the second serving cell to schedule the transmission of the multicast service, and may further send the second DCI in the first serving cell and the third serving cell to schedule the transmission of the unicast service.

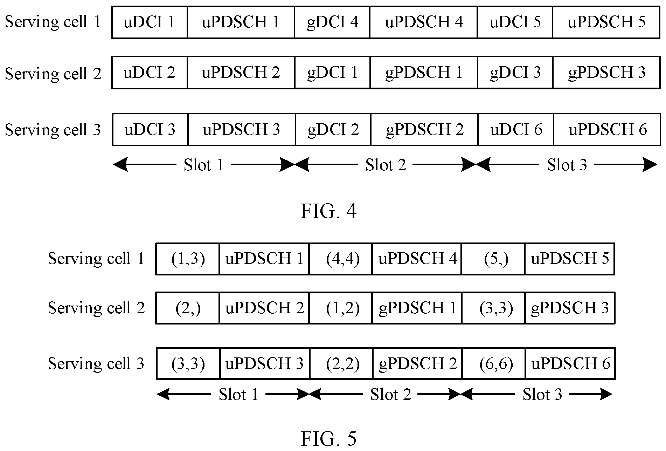

FIG. 4 is a schematic diagram of the DCI and the downlink data channels that are listed in FIG. 3 and that are sent to the terminal device 32. Herein, that there are three serving cells between the access network device 31 and the terminal device 32 is used as an example for description. It should be learned that, it is feasible that there is only one or two serving cells in the figure, or there are more serving cells. In the figure, uDCI represents the second DCI for scheduling the unicast service, uPDSCH represents the second downlink data channel, gDCI represents the first DCI for scheduling the multicast service, and gPDSCH represents the first downlink data channel. The DCI may be specifically sent on a physical downlink control channel PDCCH.

In a slot 1, the access network device 31 may separately send uDCI 1 to 3 in serving cells 1 to 3, to schedule transmission of uPDSCHs 1 to 3 in the slot 1. In a slot 2, the access network device 31 may separately schedule, in the serving cells 2 and 3, transmission of gPDSCHs 1 and 2 by using gDCI 1 and 2, and schedule, in the serving cell 1, transmission of a uPDSCH 4 by using uDCI 4. Similarly, in a slot 3, the access network device 31 may separately schedule, in the serving cells 1 and 3, transmission of uPDSCHs 5 and 6 by using uDCI 5 and 6, and schedule, in the serving cell 2, transmission of a gPDSCH 3 by using gDCI 3.

### DCI format and information

Each piece of first DCI includes a first downlink assignment index DAI, the first DAI includes a first counter downlink assignment index C-DAI, and the first C-DAI indicates an accumulative quantity of pieces of first-type DCI for scheduling transmission of a downlink data channel. Each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel. In other words, for the C-DAI, the first DCI for scheduling the multicast service and the second DCI for scheduling the unicast service are separately counted in this embodiment of this application. To be specific, the first C-DAI indicates the accumulative quantity of pieces of first DCI for scheduling the multicast service, and the second C-DAI indicates the accumulative quantity of pieces of second DCI for scheduling the unicast service.

Particularly, for example, considering a scenario in which there may be more than one serving cell between the access network device and the terminal device, the first C-DAI may indicate, up to a current serving cell and a current physical downlink control channel PDCCH monitoring occasion, an accumulative quantity of pieces of sent DCI for scheduling transmission of a physical downlink shared channel PDSCH and/or sent first-type DCI for indicating a semi-persistent scheduling SPS PDSCH release; and/or the second C-DAI may indicate, up to the current serving cell and the current physical downlink control channel PDCCH monitoring occasion, an accumulative quantity of pieces of sent DCI for scheduling transmission of a physical downlink shared channel PDSCH and/or sent second-type DCI for indicating a semi-persistent scheduling SPS PDSCH release.

A counting rule of the first C-DAI may be first counting in ascending order of serving cell indexes, and then counting in ascending order of PDCCH monitoring occasions. Similarly, a counting rule of the second C-DAI may also be first counting in ascending order of the serving cell indexes, and then counting in ascending order of the PDCCH monitoring occasions.

The first DAI may further include a first total downlink assignment index T-DAI, and the first T-DAI indicates, up to the current physical downlink control channel PDCCH monitoring occasion, an accumulative quantity of pieces of sent DCI for scheduling the transmission of the physical downlink shared channel PDSCH and sent first-type DCI for indicating the semi-persistent scheduling SPS PDSCH release. Similarly, the second DAI further includes a second total downlink assignment index T-DAI, and the second T-DAI indicates, up to the current physical downlink control channel PDCCH monitoring occasion, an accumulative quantity of pieces of sent DCI for scheduling the transmission of the physical downlink shared channel PDSCH and sent second-type DCI for indicating the semi-persistent scheduling SPS PDSCH release.

Whether the first DAI and the second DAI include the T-DAI may depend on types of the DCI. For example, fallback DCI (for example, a DCI format 1_0) includes only a C-DAI. Non-fallback DCI (for example, a DCI format 1_1) may include only a C-DAI, or may include both a C-DAI and a T-DAI. This is merely an example for description, and whether different DCI formats include the T-DAIs may be flexibly designed.

In addition, it should be noted that, because a capacity limitation of the DCI is considered, to reduce bit overheads of the DCI, the C-DAI and the T-DAI may be represented by using 2-bit loopback. To be specific, assuming that an actual value of the C-DAI or the T-DAI represented by using decimal notation is set to X, the C-DAI or the T-DAI included in the DCI is Xmod4, where Xmod4 represents a remainder obtained by dividing X by 4.

The PDCCH monitoring occasion includes an available time unit in which the PDCCH or the DCI is sent to the terminal device, or a time unit in which the terminal device needs to monitor the PDCCH or the DCI. The time unit in implementations of this application may be a slot (Slot), a mini-slot (mini-slot), or another time length including a plurality of time-domain symbols.

FIG. 5 is a schematic diagram of examples of the DAIs included in the DCI in FIG. 4. The DAI included in each DCI in FIG. 4 is represented in a format of (C,T), where C represents a value of a C-DAI, and T represents a value of a T-DAI. Herein, for example, it is assumed that the slots 1 to 3 are all PDCCH monitoring occasions, and it is assumed that the uDCI 2 and the uDCI 5 are fallback DCI and do not include T-DAIs. The other pieces of DCI are non-fallback DCI, and include T-DAIs. If a position of T has no value, it indicates that the DCI does not include a T-DAI.

Because a counting rule of the C-DAI is first counting in frequency domain, and then counting in time domain, that is, first counting in ascending order of serving cell indexes, and then counting in ascending order of PDCCH monitoring occasions, and the uDCI 1 in FIG. 4 is in the serving cell 1 in the slot 1, a value of a second C-DAI is 1. Correspondingly, because the uDCI 2 and the uDCI 3 in the same slot 1 are in the serving cell 2 and the serving cell 3, according to a principle of first counting in frequency domain, values of second C-DAIs in the uDCI 2 and the uDCI 3 are 2 and 3. Because an accumulative quantity of pieces of sent second DCI on a current PDCCH monitoring occasion (namely, the slot 1) is 3, values of second T-DAIs in the non-fallback uDCI 1 and the non-fallback uDCI 2 are 3, and the fallback uDCI 2 does not include a second T-DAI.

In the slot 2, because the uDCI 4 is still second DCI, values of a second C-DAI and a second T-DAI that are included in the uDCI 4 are an accumulative quantity of pieces of second DCI (namely, the uDCI 1 to 3) in the slot 1. The gDCI 1 sent in the serving cell 2 and the gDCI 2 sent in the serving cell 3 are both first DCI, and accumulative counting needs to be separately performed on first C-DAIs included in the gDCI 1 and the gDCI 2. Therefore, for the gDCI 1, the first DCI is sent once accumulatively up to a current serving cell (namely, the serving cell 2) and a current PDCCH monitoring occasion (the slot 2). Therefore, a value of the first C-DAI in the gDCI 1 is 1. For the gDCI 2, the first DCI is sent twice accumulatively up to a current serving cell (namely, the serving cell 3) and a current PDCCH monitoring occasion (the slot 2). Therefore, a value of the first C-DAI in the gDCI 1 is 2. Because an accumulative quantity of pieces of sent first DCI up to the current PDCCH monitoring occasion (namely, the slot 2) is 2, values of first T-DAIs in the gDCI 1 and the gDCI 2 are both 2.

Similarly, in the slot 3, the fallback uDCI 5 is the 5^{th} piece of second DCI accumulatively sent up to the slot 3 and the serving cell 1. Therefore, a value of a second C-DAI in the uDCI 5 is 5, and the uDCI 5 does not include the T-DAI. The non-fallback uDCI 6 is the 6^{th} piece of second DCI accumulatively sent up to the slot 3 and the serving cell 3. Therefore, a value of a second C-DAI in the uDCI 6 is 6, and a value of a second T-DAI in the uDCI 6 is 6. The gDCI 3 is the 3^{rd} piece of first DCI accumulatively sent up to the slot 3 and the serving cell 2. Therefore, a value of a first C-DAI in the gDCI 3 is 3. An accumulative quantity of pieces of sent first DCI up to the slot 3 is 3. Therefore, a value of a first T-DAI in the gDCI 3 is 3.

It should be understood that, in this embodiment, sending occasions of HARQ-ACK feedback information corresponding to the N first downlink data channels and the M second downlink data channels are a third time unit (for example, slot), that is, the sending occasions of the HARQ-ACK feedback information are the same time unit, which is referred to as the third time unit in this embodiment.

In a specific implementation, the access network device may send a PDSCH-to-HARQ feedback timing indicator (PDSCH-to-HARQ feedback timing indicator, K1) to the terminal device. The indicator may be carried in the downlink control information DCI, for example, carried in the first DCI or second DCI, or configured by using a higher layer parameter. The indication information indicates a time unit offset between a PDSCH and a HARQ. Accordingly, the terminal device may receive the PDSCH-to-HARQ feedback timing indicator K1, to determine a feedback occasion of HARQ feedback information corresponding to the PDSCH.

303: The terminal device generates a codebook of the automatic repeat request acknowledgement HARQ-ACK feedback information based on the first DAIs in the N pieces of first DCI, the second DAIs in the M pieces of second DCI, the N first downlink data channels, and the M second downlink data channels, where the codebook includes a first sub-codebook and a second sub-codebook, the first sub-codebook includes the ARQ-ACK feedback information for the N first downlink data channels, and the second sub-codebook includes the HARQ-ACK feedback information for the M second downlink data channels.

In a specific implementation, the terminal device generates the first sub-codebook based on the first DAIs in the N pieces of first DCI and the N first downlink data channels, and generates the second sub-codebook based on the second DAIs in the M pieces of second DCI and the M second downlink data channels. For example, the terminal device may determine, based on the first DAIs in the N pieces of first DCI, positions of HARQ-ACK feedback bits corresponding to the N first downlink data channels in the first sub-codebook, and determine a value of each bit in the first sub-codebook based on a receiving status of each first downlink data channel. Similarly, the terminal device may determine, based on the second DAIs in the M pieces of second DCI, positions of HARQ-ACK feedback bits corresponding to the M second downlink data channels in the second sub-codebook, and determine a value of each bit in the second sub-codebook based on a receiving status of each second downlink data channel.

The first sub-codebook includes consecutive bits, and the second sub-codebook includes consecutive bits. The codebook may include consecutive bits. In other words, bits of the first sub-codebook and bits of the second sub-codebook are consecutive or concatenated, and the first sub-codebook is before the second sub-codebook, or the first sub-codebook is after the second sub-codebook. The codebook may include inconsecutive bits, but the first sub-codebook still includes consecutive bits, and the second sub-codebook still includes consecutive bits. In other words, the first sub-codebook and the second sub-codebook may be independent and inconsecutive, and the codebook is only a set that logically includes the first sub-codebook and the second sub-codebook.

In a specific implementation, a total quantity of bits in the first sub-codebook (namely, a payload size of the first sub-codebook) is equal to a value of a largest C-DAI in C-DAIs of the received N pieces of first DCI, or a total quantity of bits in the first sub-codebook is a value of a largest T-DAI in T-DAIs of the received N pieces of first DCI. In addition, an i^{th} bit in the first sub-codebook is for feeding back HARQ-ACK feedback information for a first downlink data channel scheduled by using an i^{th} piece of first DCI, where the i^{th} piece of first DCI is first DCI whose value of the C-DAI is i. 1≤i≤N, and i is a positive integer. If the terminal device does not receive the i^{th} piece of first DCI, the terminal device sets the i^{th} bit to NACK or 0.

Similarly, a total quantity of bits in the second sub-codebook (namely, a payload size of the second sub-codebook) is equal to a value of a largest C-DAI in C-DAIs of the M pieces of received second DCI, or a total quantity of bits in the second sub-codebook is a value of a largest T-DAI in T-DAIs of the M pieces of received second DCI. In addition, a j^{th} bit in the second sub-codebook is for feeding back HARQ-ACK feedback information for a second downlink data channel scheduled by using a j^{th} piece of second DCI, where the j^{th} piece of second DCI is second DCI whose value of the C-DAI is j. 1≤j≤M, and j is a positive integer. If the terminal device does not receive the j^{th} piece of second DCI, the terminal device sets the j^{th} bit to NACK or 0.

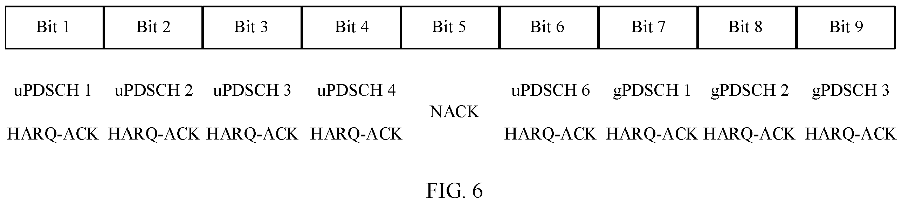

FIG. 6 is a schematic diagram of generating a corresponding codebook by a terminal device in the case of sending the DCI shown in FIG. 4 and FIG. 5. In a codebook shown in FIG. 6, a bit 1 to a bit 6 are included in a second sub-codebook, and a bit 7 to a bit 9 are included in a first sub-codebook. As shown in FIG. 6, for example, the first sub-codebook and the second sub-codebook are concatenated, but the first sub-codebook and the second sub-codebook may alternatively be independent.

The terminal device receives six pieces of second DCI in total, namely, uDCI 1 to 6. Second DCI with a largest C-DAI is the uDCI 6, and a value of the largest C-DAI is 6. Second DCI with a largest T-DAI is also the uDCI 6, and a value of the largest T-DAI is 6. Therefore, the terminal device may generate a 6-bit second sub-codebook, where the bit 1 to the bit 6 respectively correspond to HARQ-ACK feedback information for a uPDSCH 1 to a uPDSCH 6 scheduled by using the uDCI 1 to the uDCI 6. It is assumed that the terminal device does not successfully receive the uDCI 5, and correspondingly, the terminal device does not receive the uPDSCH 5. Because the terminal device does not receive second DCI whose value of the C-DAI is 5 (that is, the terminal device does not receive the 5^{th} piece of second DCI), the terminal device sets the bit 5 in the second sub-codebook to NACK or 0. The terminal device sets values of the bit 1 to the bit 4 and the bit 6 to ACK or NACK depending on whether the uPDSCHs 1 to 4 and the uPDSCH 6 are successfully received. For example, a value of the ACK is 1, and a value of the NACK is 0.

Similarly, the terminal device receives three pieces of first DCI in total, namely, gDCI 1 to 3. First DCI with a largest C-DAI is the gDCI 3, and a value of the largest C-DAI is 3. First DCI with a largest T-DAI is also the gDCI 3, and a value of the largest T-DAI is 3. Therefore, the terminal device may generate a 3-bit second sub-codebook, namely, the bit 7 to the bit 9 in the codebook shown in FIG. 6, namely, the bit 1 to the bit 3 in the second sub-codebook. The bit 1 to the bit 3 in the second sub-codebook (namely, the bit 7 to the bit 9 in the codebook shown in FIG. 6) respectively correspond to HARQ-ACK feedback information for a gPDSCH 1 to a gPDSCH 3 scheduled by using the gDCI 1 to the gDCI 3. The terminal device sets values of the bit 1 to the bit 3 in the second sub-codebook to ACK or NACK depending on whether the gPDSCHs 1 to 3 are successfully received. For example, a value of the ACK is 1, and a value of the NACK is 0.

304: The terminal device sends the codebook in the third time unit. Accordingly, the access network device receives the codebook in the third time unit.

In the third time unit, the terminal device may send the codebook in a manner of concatenating the first sub-codebook and the second sub-codebook, or may separately send the first sub-codebook and the second sub-codebook, to send the entire codebook. A method for selecting a resource required for sending the codebook may use a resource selection manner for sending a dynamic codebook in a conventional technology, or may use a resource selection manner different from that in the conventional technology. This embodiment provides examples of the following plurality of manners for sending the codebook.

### Manner 1

In manner 1, step 304 may be specifically implemented in the following manner.

701: The terminal device determines a first physical uplink control channel PUCCH resource set from a plurality of PUCCH resource sets based on a payload size of the codebook, where each of the plurality of PUCCH resource sets includes at least one PUCCH resource.

The plurality of PUCCH resource sets are configured for the terminal device, and each of the plurality of PUCCH resource sets includes the at least one PUCCH resource. For example, each of the plurality of PUCCH resource sets includes a plurality of PUCCH resources. The plurality of PUCCH resource sets may be preconfigured or fixedly configured in the terminal device according to a protocol, or may be configured by the access network device for the terminal device by using signaling.

Different PUCCH resource sets may have different identifiers. Sizes of PUCCH resources belonging to different PUCCH resource sets may be different. A large PUCCH resource can carry a large quantity of bits of HARQ-ACK feedback information, and a small PUCCH resource can carry a small quantity of bits of HARQ-ACK feedback information. For example, four PUCCH resource sets respectively have PUCCH resource set identifiers (PUCCH Resource Set ID) 1 to 4. A quantity of bits of HARQ-ACK feedback information carried in a PUCCH resource included in a PUCCH resource set with a smaller identifier number is less than a quantity of bits of HARQ-ACK feedback information carried in a PUCCH resource included in a PUCCH resource set with a larger identifier number.

The payload size of the codebook may be a quantity of bits of the codebook or another variable corresponding to the quantity of the bits of the codebook. The terminal device may select the first PUCCH set from the plurality of PUCCH resource sets based on the total quantity *O*_{UCI} of the bits of the codebook. For example, it is assumed that there are a total of four PUCCH resource sets: the 1 ^{st} to 4^{th} PUCCH resource sets (that is, pucch-ResourceSetId=0, 1, 2, 3). If *O*_{UCI} ≤ 2, the UE selects the 1^{st} PUCCH resource set (that is, pucch-ResourceSetId=0). If 2 < *O*_{UCI} ≤ *N*₂ , the UE selects the 2^{nd} PUCCH resource set (that is, pucch-ResourceSetId=1), where N₂ is configured by using a higher layer parameter; if N₂ is not configured by using the higher layer parameter, a value of N₂ is 1706. If *N*₂ *< O*_{UCI} ≤ *N*₃ , the UE selects the 3^{rd} PUCCH resource set (pucch-ResourceSetId=2), where N₃ is configured by using a higher layer parameter; if N₃ is not configured by using the higher layer parameter, a value of N₃ is 1706. If *N*₃ < *O*_{UCI} ≤ 1706, the UE selects the 4^{th} PUCCH resource set (pucch-ResourceSetId=3), where N₃ is configured by using a higher layer parameter; if N₃ is not configured by using the higher layer parameter, a value of N₃ is 1706. The foregoing is merely an example of a PUCCH resource set configuration manner. A person skilled in the art may flexibly set, based on an actual requirement, a quantity of PUCCH resource sets and a payload range of a codebook corresponding to each PUCCH resource set.

702: The terminal device determines a first PUCCH resource from the first PUCCH resource set based on PUCCH resource indication information (PUCCH resource indicator, PRI) included in an m^{th} piece of DCI.

In an implementation, the m^{th} piece of DCI is the last piece of received DCI in all HARQ-ACK information bits in the codebook. In other words, the m^{th} piece of DCI is the last piece of received DCI in the received N pieces of first DCI and M pieces of second DCI. Herein, in a same slot, DCI with a largest serving cell index is considered as the last received DCI. For example, in the examples shown in FIG. 4 and FIG. 5, because the uDCI 6 is the last received DCI in all the M and N pieces of DCI, the uDCI 6 is the m^{th} piece of DCI.

In another implementation, the m^{th} piece of DCI is second DCI corresponding to the last HARQ-ACK information bit that is for the second downlink data channel and that is in the codebook, or the m^{th} piece of DCI is received second DCI whose value of a second C-DAI is the largest. The second DCI corresponding to the last HARQ-ACK information bit for the second downlink data channel is the last received DCI in the M pieces of received second DCI. Similarly, in a same slot, DCI with a largest serving cell index is considered as the last received DCI. According to the counting rule of the second C-DAI, a value of a second C-DAI in the last received second DCI is definitely the largest.

In still another implementation, the m^{th} piece of DCI is first DCI corresponding to the last HARQ-ACK information bit that is for the first downlink data channel and that is in the codebook, or the m^{th} piece of DCI is received first DCI whose value of a first C-DAI is the largest. The first DCI corresponding to the last HARQ-ACK information bit for the first downlink data channel is the last received DCI in the N pieces of received first DCI. Similarly, in a same slot, DCI with a largest serving cell index is considered as the last received DCI. According to the counting rule of the first C-DAI, a value of a first C-DAI in the last received first DCI is definitely the largest.

In addition, each piece of DCI further includes a PUCCH PRI. The PRI is for determining the first PUCCH resource from the first PUCCH resource set. For example, the PRI may represent eight PUCCH resources by using a 3-bit index. The network device may preconfigure a PUCCH resource list resourceList, and each value/status in the PRI corresponds to a resource ID in the PUCCH resource list.

In correspondence to the terminal device, before sending the m^{th} piece of DCI, the access network device further performs the following steps:
711: determining the first physical uplink control channel PUCCH resource set from the plurality of PUCCH resource sets, where each of the plurality of PUCCH resource sets includes the plurality of PUCCH resources, and the first PUCCH resource set corresponds to the payload size of the to-be-received codebook;
712: determining the first PUCCH resource from the first PUCCH resource set; and
713: generating the m^{th} piece of DCI, where the m^{th} piece of DCI includes the PUCCH PRI, and the PRI is for determining the first PUCCH resource.

It may be understood herein that although the access network device has not received the codebook in a process of determining the first PUCCH resource set, because the access network device knows the accumulative quantity of pieces of sent DCI, the access network device definitely knows the payload size of the to-be-received codebook.

Steps 711 to 713 may be performed after the access network device sends an (m-1)^{th} piece of DCI and before the access network device sends the m^{th} piece of DCI, or may be performed before the access network device sends an (m-1)^{th} piece of DCI. A person skilled in the art may understand that this may be determined based on an internal scheduling policy of the access network device, which is not limited herein.

703: The terminal device sends the codebook on the determined first PUCCH resource in the third time unit. Accordingly, the access network device receives the codebook on the first PUCCH resource.

### Manner 2

In manner 2, step 304 may be specifically implemented in the following manner.

801: The terminal device determines a first physical uplink control channel PUCCH resource set from a plurality of PUCCH resource sets based on the payload size of the first sub-codebook, where each of the plurality of PUCCH resource sets includes a plurality of PUCCH resources; and determines a second physical uplink control channel PUCCH resource set from the plurality of PUCCH resource sets based on the payload size of the second sub-codebook.

For explanations and implementations of the payload size and the PUCCH resource set, refer to manner 1. Repeated parts are not described herein again. It should be noted that there is no fixed sequence of determining the first PUCCH resource set and determining the second PUCCH resource set, and the first PUCCH resource set and the second PUCCH resource set may be the same or different.

802: The terminal device determines a first PUCCH resource from the first PUCCH resource set based on a PUCCH PRI included in an m1^{th} piece of received first DCI, and determines a second PUCCH resource from the second PUCCH resource set based on a PUCCH PRI included in an m2^{th} piece of received second DCI.

In an implementation, the m1^{th} piece of DCI is first DCI corresponding to the last HARQ-ACK information bit that is for the first downlink data channel and that is in the codebook, the m^{th} piece of DCI is last received first DCI, or the m^{th} piece of DCI is received first DCI that has a first C-DAI indicating a largest accumulative quantity of pieces of first-type DCI. The m2^{th} piece of DCI is second DCI corresponding to the last HARQ-ACK information bit that is for the second downlink data channel and that is in the codebook, the m^{th} piece of DCI is last received second DCI, or the m^{th} piece of DCI is received second DCI that has a second C-DAI indicating a largest accumulative quantity of pieces of second-type DCI.

In correspondence to the terminal device, before sending the m1^{th} piece of first DCI, the access network device further performs the following steps:
811: determining the first physical uplink control channel PUCCH resource set from the plurality of PUCCH resource sets, where each of the plurality of PUCCH resource sets includes the plurality of PUCCH resources, and the first PUCCH resource set corresponds to the payload size of the to-be-received first sub-codebook;
812: determining the first PUCCH resource from the first PUCCH resource set; and
813: generating the m1^{th} piece of DCI, where the m1^{th} piece of DCI includes the first PUCCH resource indication information PRI, and the PRI is for determining the first PUCCH resource.

Before sending the m2^{th} piece of second DCI, the access network device further performs the following steps:
814: determining the second physical uplink control channel PUCCH resource set from the plurality of PUCCH resource sets, where the second PUCCH resource set corresponds to the payload size of the to-be-received second sub-codebook;
815: determining the second PUCCH resource from the second PUCCH resource set; and
816: generating the m2^{th} piece of DCI, where the m2^{th} piece of DCI includes the second PUCCH resource indication information PRI, and the PRI is for determining the second PUCCH resource.

It may be understood herein that although the access network device has not received the codebook in a process of determining the first PUCCH resource set, because the access network device knows the accumulative quantity of pieces of sent first DCI and the accumulative quantity of pieces of sent second DCI, the access network device definitely knows the payload size of the to-be-received first sub-codebook and the payload size of the to-be-received second sub-codebook.

Steps 811 to 813 may be performed after the access network device sends an (m1-1)^{th} piece of first DCI and before the access network device sends the m1^{th} piece of first DCI, or may be performed before the access network device sends an (m1-1)^{th} piece of first DCI. Steps 814 to 816 may be performed after the access network device sends an (m2-1)^{th} piece of second DCI and before the access network device sends the m2^{th} piece of second DCI, or may be performed before the access network device sends an (m2-1)^{th} piece of second DCI. A person skilled in the art may understand that this may be determined based on an internal scheduling policy of the access network device, which is not limited herein. In addition, there is no fixed sequence of performing steps 811 to 813 and steps 814 to 816. The sequence may be determined based on a sequence of the m1^{th} piece of first DCI and the m2^{th} piece of second DCI, or may be determined based on the internal scheduling policy of the access network device.

803: In the third time unit, the terminal device sends the first sub-codebook on the determined first PUCCH resource, and sends the second sub-codebook on the determined second PUCCH resource. Accordingly, in the third time unit, the access network device receives the first sub-codebook on the first PUCCH resource, and receives the second sub-codebook on the second PUCCH resource.

In manner 2, one piece of DCI for multicast transmission is sent to a group of UEs, and the group of UEs determine a PUCCH resource based on a same PUCCH PRI. If a PUCCH resource is determined based on a PRI in the last multicast DCI, a plurality of UEs simultaneously send the PUCCH carrying a HARQ at a same moment. As a result, a system load is excessively heavy. PRIs in unicast DCI received by different UEs may be different. Therefore, PUCCH resources determined based on the PRIs in the unicast DCI may be staggered in time domain, to reduce the system load to some extent.

In an implementation, when implementing step 803, the terminal device may specifically perform the following steps:
when the first PUCCH resource and the second PUCCH resource do not overlap in time domain, in the third time unit, sending the first sub-codebook on the determined first PUCCH resource and sending the second sub-codebook on the determined second PUCCH resource; or
when the first PUCCH resource and the second PUCCH resource overlap in time domain,
determining a third physical uplink control channel PUCCH resource set from the plurality of PUCCH resource sets based on a payload size of the codebook,
determining a third PUCCH resource from the third PUCCH resource set based on PUCCH resource indication information PRI included in an m^{th} piece of DCI, and
sending the codebook on the determined third PUCCH resource in the third time unit.

Explanations and implementations of the m^{th} DCI and the PRI are the same as those in 702, and details are not described herein again.

Correspondingly, when implementing step 803, the access network device may specifically perform the following steps:
when the first PUCCH resource and the second PUCCH resource do not overlap in time domain, receiving the first sub-codebook on the first PUCCH resource in the third time unit and receiving the second sub-codebook on the second PUCCH resource in the third time unit; or
when the first PUCCH resource and the second PUCCH resource overlap in time domain,
determining a third physical uplink control channel PUCCH resource set from the plurality of PUCCH resource sets based on a payload size of the to-be-received codebook,
determining a third PUCCH resource from the third PUCCH resource set based on PUCCH resource indication information PRI included in an m^{th} piece of DCI, and
receiving the codebook on the determined third PUCCH resource in the third time unit.

The third PUCCH resource set may be completely the same as the first PUCCH resource set or the second PUCCH resource set, or may be a PUCCH resource set different from the first PUCCH resource set or the second PUCCH resource set.

### Manner 3

In manner 3, step 304 may be specifically implemented in the following manner.

A plurality of physical uplink control channel PUCCH resource sets include a first PUCCH resource set group and a second PUCCH resource set group, and each PUCCH resource set in each PUCCH resource set group includes a plurality of PUCCH resources.

901: The terminal device determines a first PUCCH resource set from the first PUCCH resource set group based on the payload size of the first sub-codebook, and determines a second PUCCH resource set from the second PUCCH resource set group based on the payload size of the second sub-codebook.

Herein, each of the first PUCCH resource set group and the second PUCCH resource set group includes a plurality of PUCCH resource sets, and each PUCCH resource set includes at least one PUCCH resource. PUCCH resources included in the first PUCCH resource set group and the second PUCCH resource set group may be completely different.

In an implementation, a PUCCH resource in the first PUCCH resource set group is specially for feeding back the HARQ-ACK feedback information corresponding to the first downlink data channel scheduled by using the first-type DCI, and a PUCCH resource in the second PUCCH resource set group is specially for feeding back the HARQ-ACK feedback information corresponding to the second downlink data channel scheduled by using the second-type DCI.

In another implementation, a start symbol of each PUCCH resource in the first PUCCH resource set group in time domain is located before a start symbol of each PUCCH resource in the second PUCCH resource set group in time domain.

In still another implementation different from the foregoing implementation, an end symbol of each PUCCH resource in the first PUCCH resource set group in time domain is located before an end symbol of each PUCCH resource in the second PUCCH resource set group in time domain.

In yet another implementation different from the foregoing implementation, a start symbol of each PUCCH resource in the first PUCCH resource set group in time domain is located before a first symbol, and a start symbol of each PUCCH resource in the second PUCCH resource set group in time domain is located after the first symbol.

In still yet another implementation different from the foregoing implementation, an end symbol of each PUCCH resource in the first PUCCH resource set group in time domain is located before a first symbol, and an end symbol of each PUCCH resource in the second PUCCH resource set group in time domain is located after the first symbol.

902: The terminal device determines a first PUCCH resource from the first PUCCH resource set based on a PUCCH PRI included in an m1^{th} piece of received first DCI, and determines a second PUCCH resource from the second PUCCH resource set based on a PUCCH PRI included in an m2^{th} piece of received second DCI.

In correspondence to the terminal device, before sending the m1^{th} piece of first DCI, the access network device further performs the following steps:
determining the first PUCCH resource set from the first PUCCH resource set group, where the first PUCCH resource set corresponds to the payload size of the to-be-received first sub-codebook;
determining the first PUCCH resource from the first PUCCH resource set; and
generating the m1^{th} piece of DCI, where the m1^{th} piece of DCI includes the first PUCCH resource indication information PRI, and the PRI is for determining the first PUCCH resource.

Before sending the m2^{th} piece of second DCI, the access network device further performs the following steps:
determining the second PUCCH resource set from the second PUCCH resource set group, where the second PUCCH resource set corresponds to the payload size of the to-be-received second sub-codebook;
determining the second PUCCH resource from the second PUCCH resource set; and
generating the m2^{th} piece of DCI, where the m2^{th} piece of DCI includes the second PUCCH resource indication information PRI, and the PRI is for determining the second PUCCH resource.

903: In the third time unit, the terminal device sends the first sub-codebook on the determined first PUCCH resource, and sends the second sub-codebook on the determined second PUCCH resource. Accordingly, in the third time unit, the access network device receives the first sub-codebook on the first PUCCH resource, and receives the second sub-codebook on the second PUCCH resource.

In manner 3, the plurality of physical uplink control channel PUCCH resource sets include the first PUCCH resource set group and the second PUCCH resource set group, and the PUCCH resources in the first PUCCH resource set group and the second PUCCH resource set group have different time-domain positions. Such a design can enable a HARQ-ACK feedback latency to better satisfy a unicast or multicast service requirement. For example, if the unicast service is an ultra-reliable and low-latency scenario (Ultra-Reliable and Low-Latency Communications, URLLC) service, the unicast service has a high latency requirement. If the multicast service is an enhanced mobile broadband (Enhanced Mobile Broadband, eMBB) service, the multicast service has a low latency requirement. Therefore, for example, when the start symbol of each PUCCH resource in the first PUCCH resource set group in the time domain is located before the first symbol, and the start symbol of each PUCCH resource in the second PUCCH resource set group in the time domain is located after the first symbol, HARQ-ACK feedback information of the unicast service having the high latency requirement can be sent in a more timely manner.

In an implementation, when implementing 903, the terminal device may specifically perform the following steps:
when the first PUCCH resource and the second PUCCH resource do not overlap in time domain, in the third time unit, sending the first sub-codebook on the determined first PUCCH resource and sending the second sub-codebook on the determined second PUCCH resource; or
when the first PUCCH resource and the second PUCCH resource overlap in time domain,
determining a third physical uplink control channel PUCCH resource set from the plurality of PUCCH resource sets, the first PUCCH resource set group, the second PUCCH resource set group, or a third PUCCH resource set group based on a payload size of the codebook,
determining a third PUCCH resource from the third PUCCH resource set based on PUCCH resource indication information PRI included in an m^{th} piece of DCI, and
sending the codebook on the determined third PUCCH resource in the third time unit.

In an implementation, when implementing 903, the access network device may specifically perform the following steps:
when the first PUCCH resource and the second PUCCH resource do not overlap in time domain, receiving the first sub-codebook on the first PUCCH resource in the third time unit and receiving the second sub-codebook on the second PUCCH resource in the third time unit; or
when the first PUCCH resource and the second PUCCH resource overlap in time domain,
determining a third physical uplink control channel PUCCH resource set from the plurality of PUCCH resource sets, the first PUCCH resource set group, the second PUCCH resource set group, or a third PUCCH resource set group based on a payload size of the to-be-received codebook,
determining a third PUCCH resource from the third PUCCH resource set based on PUCCH resource indication information PRI included in an m^{th} piece of DCI, and
receiving the codebook on the determined third PUCCH resource in the third time unit.

The third PUCCH resource set may be completely the same as the first PUCCH resource set or the second PUCCH resource set, or may be a PUCCH resource set different from the first PUCCH resource set or the second PUCCH resource set.

Explanations and implementations of the m^{th} DCI and the PRI are the same as those in 702, and details are not described herein again.

Explanations and implementations of the m1^{th} received first DCI and the m2^{th} received second DCI are the same as those in manner 2, and details are not described herein again.

In embodiments of the present invention, accumulative counting is separately performed on the first C-DAI and the second C-DAI, so that C-DAI values can be correctly and appropriately set for unicast and multicast services, and a data receive end can generate HARQ-ACK feedback information for the unicast and multicast services based on the first C-DAI and the second C-DAI, to ensure reliability of HARQ-ACK feedback information corresponding to multicast downlink data channels.

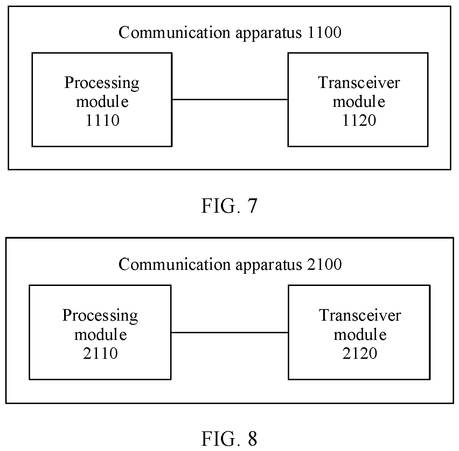

FIG. 7 is a schematic block diagram of a communication apparatus 1100 according to an embodiment of this application. For example, the communication apparatus 1100 may be a terminal device, or may be a chip used in the terminal device or another combined device, component, or the like that has a function of the terminal device. All descriptions of the terminal device side in the foregoing embodiments are applicable to the communication apparatus 1100, and details are not described below again. The communication apparatus 1100 includes a processing module 1110 and a transceiver module 1120. When the communication apparatus 1100 is the terminal device, the transceiver module 1120 may be a transceiver, where the transceiver may include an antenna, a radio frequency circuit, and the like; the processing module 1110 may be a processor, for example, a baseband processor, where the baseband processor may include one or more central processing units (central processing units, CPUs). When the communication apparatus 1100 is the component that has the function of the terminal device, the transceiver module 1120 may be a radio frequency unit, and the processing module 1110 may be a processor, for example, a baseband processor. When the communication apparatus 1100 is a chip system, the transceiver module 1120 may be an input/output interface of the chip (for example, a baseband chip), and the processing module 1110 may be a processor of the chip system, and may include one or more central processing units. It should be understood that, in this embodiment of this application, the processing module 1110 may be implemented by a processor or a processor-related circuit component, and the transceiver module 1120 may be implemented by a transceiver or a transceiver-related circuit component.

For example, the processing module 1110 may be configured to perform all operations other than receiving/sending operations performed by the apparatus in the embodiment shown in FIG. 3, for example, steps 303, 701, 702, 801, 802, 901, and 902, and/or may be configured to support another process of the technology described in this specification. The transceiver module 1120 may be configured to perform all receiving/sending operations performed by the terminal apparatus in the embodiment shown in FIG. 3, for example, steps 301, 302, 304, 703, 803, and 903, and/or may be configured to support another process of the technology described in this specification.

In addition, the transceiver module 1120 may be one functional module. The functional module can implement both a sending operation and a receiving operation. For example, the transceiver module 1120 may be configured to perform all sending operations and receiving operations performed by the terminal apparatus in the embodiment shown in FIG. 3. For example, when a sending operation is performed, it may be considered that the transceiver module 1120 is a sending module. When a receiving operation is performed, it may be considered that the transceiver module 1120 is a receiving module. Alternatively, the transceiver module 1120 may include two functional modules. The transceiver module 1120 may be considered as a general term of the two functional modules, and the two functional modules are respectively a sending module and a receiving module. The sending module is configured to implement a sending operation. For example, the sending module may be configured to perform all sending operations performed by the first terminal apparatus in any implementation of the embodiment shown in FIG. 3. The receiving module is configured to implement a receiving operation. For example, the receiving module may be configured to perform all receiving operations performed by the terminal apparatus in the embodiment shown in FIG. 3.

Specifically, in an implementation of this embodiment,
the transceiver module 1120 is configured to: receive N pieces of first downlink control information DCI and M pieces of second DCI; and receive N first downlink data channels and M second downlink data channels, where the N first downlink data channels are scheduled by using the N pieces of first downlink control information, and the M second downlink data channels are scheduled by using the M pieces of second downlink control information.

The processing module 1110 is configured to generate a codebook of automatic repeat request acknowledgement HARQ-ACK feedback information based on first DAIs in the N pieces of first DCI, second DAIs in the M pieces of second DCI, the N first downlink data channels, and the M second downlink data channels, where the codebook includes a first sub-codebook and a second sub-codebook, the first sub-codebook includes ARQ-ACK feedback information for the N first downlink data channels, and the second sub-codebook includes HARQ-ACK feedback information for the M second downlink data channels.

The transceiver module 1120 is further configured to send the codebook in a third time unit.

In an implementation,
the processing module 1110 is further configured to: determine a first physical uplink control channel PUCCH resource set from a plurality of PUCCH resource sets based on a payload size of the codebook, where each of the plurality of PUCCH resource sets includes at least one PUCCH resource; and determine a first PUCCH resource from the first PUCCH resource set based on PUCCH resource indication information included in an m^{th} piece of DCI.

The transceiver module 1120 is configured to send the codebook on the determined first PUCCH resource in the third time unit.

In another implementation,
the processing module 1110 is further configured to: determine a first physical uplink control channel PUCCH resource set from a plurality of PUCCH resource sets based on a payload size of the first sub-codebook, where each of the plurality of PUCCH resource sets includes a plurality of PUCCH resources; determine a second physical uplink control channel PUCCH resource set from the plurality of PUCCH resource sets based on a payload size of the second sub-codebook; determine a first PUCCH resource from the first PUCCH resource set based on a PUCCH PRI included in an m1^{th} received first DCI; and determine a second PUCCH resource from the second PUCCH resource set based on a PUCCH PRI included in an m2^{th} piece of received second DCI.

The transceiver module 1120 is configured to send the first sub-codebook on the determined first PUCCH resource in the third time unit and send the second sub-codebook on the determined second PUCCH resource in the third time unit.

Optionally, in this implementation,
the transceiver module 1120 is configured to: when the first PUCCH resource and the second PUCCH resource do not overlap in time domain, send the first sub-codebook on the determined first PUCCH resource in the third time unit and send the second sub-codebook on the determined second PUCCH resource in the third time unit; or
the processing module 1110 is further configured to: when the first PUCCH resource and the second PUCCH resource overlap in time domain, determine a third physical uplink control channel PUCCH resource set from the plurality of PUCCH resource sets based on a payload size of the codebook, and determine a third PUCCH resource from the third PUCCH resource set based on PUCCH resource indication information PRI included in an m^{th} piece of DCI; and
the transceiver module 1120 is further configured to send the codebook on the determined third PUCCH resource in the third time unit.

In still another implementation,
the processing module 1110 is further configured to: determine a first PUCCH resource set from a first PUCCH resource set group based on a payload size of the first sub-codebook; determine a second PUCCH resource set from a second PUCCH resource set group based on a payload size of the second sub-codebook; determine a first PUCCH resource from the first PUCCH resource set based on a PUCCH PRI included in an m1^{th} received first DCI; and determine a second PUCCH resource from the second PUCCH resource set based on a PUCCH PRI included in an m2^{th} piece of received second DCI.

The transceiver module 1120 is further configured to send the first sub-codebook on the determined first PUCCH resource in the third time unit and send the second sub-codebook on the determined second PUCCH resource in the third time unit.

Optionally, in this implementation,
the transceiver module 1120 is further configured to: when the first PUCCH resource and the second PUCCH resource do not overlap in time domain, send the first sub-codebook on the determined first PUCCH resource in the third time unit and send the second sub-codebook on the determined second PUCCH resource in the third time unit; or
the processing module 1110 is further configured to: when the first PUCCH resource and the second PUCCH resource overlap in time domain, determine a third physical uplink control channel PUCCH resource set from a plurality of PUCCH resource sets, the first PUCCH resource set group, the second PUCCH resource set group, or a third PUCCH resource set group based on a payload size of the codebook, and determine a third PUCCH resource from the third PUCCH resource set based on PUCCH resource indication information PRI included in an m^{th} piece of DCI; and

The transceiver module 1120 is further configured to send the codebook on the determined third PUCCH resource in the third time unit.

FIG. 8 is a schematic block diagram of a communication apparatus 2100 according to an embodiment of this application. For example, the communication apparatus 2100 may be the access network device. All descriptions of the access network device side in the foregoing embodiments are applicable to the communication apparatus 2100, and details are not described below again. The communication apparatus 2100 includes a processing module 2110 and a transceiver module 2120. The transceiver module 2120 may be a transceiver, where the transceiver may include an antenna, a radio frequency circuit, and the like; the processing module 2110 may be a processor, for example, a baseband processor, where the baseband processor may include one or more central processing units (central processing units, CPUs).

Specifically, in an implementation of this embodiment,
the transceiver module 2120 is configured to send N pieces of first downlink control information DCI and M pieces of second DCI in at least one first time unit, where the first DCI is first-type DCI, the second DCI is second-type DCI, each piece of first DCI includes a first downlink assignment index DAI, the first DAI includes a first counter downlink assignment index C-DAI, the first C-DAI indicates an accumulative quantity of pieces of first-type DCI for scheduling transmission of a downlink data channel, each piece of second DCI includes a second downlink assignment index DAI, the second DAI includes a second counter downlink assignment index C-DAI, and the second C-DAI indicates an accumulative quantity of pieces of second-type DCI for scheduling transmission of a downlink data channel.

The transceiver module 2120 is further configured to send N first downlink data channels and M second downlink data channels in at least one second time unit, where the N first downlink data channels are scheduled by using the N pieces of first downlink control information, and the M second downlink data channels are scheduled by using the M pieces of second downlink control information.

The transceiver module 2120 is further configured to receive a codebook of automatic repeat request acknowledgement HARQ-ACK feedback information in a third time unit.

The processing module 2110 is configured to determine the HARQ-ACK feedback information from the codebook, where the codebook includes a first sub-codebook and a second sub-codebook, the first sub-codebook includes HARQ-ACK feedback information for the N first downlink data channels, and the second sub-codebook includes HARQ-ACK feedback information for the M second downlink data channels.

In an implementation,
the processing module 2110 is further configured to: determine a first physical uplink control channel PUCCH resource set from a plurality of PUCCH resource sets, where each of the plurality of PUCCH resource sets includes a plurality of PUCCH resources, and the first PUCCH resource set corresponds to a payload size of the to-be-received codebook; determine a first PUCCH resource from the first PUCCH resource set; and generate an m^{th} piece of DCI, where the m^{th} piece of DCI includes PUCCH resource indication information PRI, and the PRI is for determining the first PUCCH resource.

The transceiver module 2120 is specifically configured to receive the codebook of the automatic repeat request acknowledgement HARQ-ACK feedback information on the first PUCCH resource in the third time unit.

In another implementation,
the processing module 2110 is further configured to: determine a first physical uplink control channel PUCCH resource set from a plurality of PUCCH resource sets, where each of the plurality of PUCCH resource sets includes a plurality of PUCCH resources, and the first PUCCH resource set corresponds to a payload size of the to-be-received first sub-codebook; determine a first PUCCH resource from the first PUCCH resource set; generate an m1^{th} piece of DCI, where the m1^{th} piece of DCI includes first PUCCH resource indication information PRI, and the PRI is for determining the first PUCCH resource; determine a second physical uplink control channel PUCCH resource set from the plurality of PUCCH resource sets, where the second PUCCH resource set corresponds to a payload size of the to-be-received second sub-codebook; determine a second PUCCH resource from the second PUCCH resource set; and generate an m2^{th} piece of DCI, where the m2^{th} piece of DCI includes second PUCCH resource indication information PRI, and the PRI is for determining the second PUCCH resource.

The transceiver module 2120 is specifically configured to receive the first sub-codebook on the first PUCCH resource in the third time unit and receive the second sub-codebook on the second PUCCH resource in the third time unit.

In the foregoing implementation, optionally,
that the transceiver module 2120 is configured to receive the first sub-codebook on the first PUCCH resource in the third time unit and receive the second sub-codebook on the second PUCCH resource in the third time unit specifically includes:

The transceiver module 2120 is configured to: when the first PUCCH resource and the second PUCCH resource do not overlap in time domain, receive the first sub-codebook on the first PUCCH resource in the third time unit and receive the second sub-codebook on the second PUCCH resource in the third time unit; or
the processing module 2110 is further configured to: when the first PUCCH resource and the second PUCCH resource overlap in time domain, determine a third physical uplink control channel PUCCH resource set from the plurality of PUCCH resource sets based on a payload size of the to-be-received codebook, and determine a third PUCCH resource from the third PUCCH resource set based on PUCCH resource indication information PRI included in an m^{th} piece of DCI; and
the transceiver module 2120 is further configured to receive the codebook on the determined third PUCCH resource in the third time unit.

In still another implementation,
a plurality of physical uplink control channel PUCCH resource sets include a first PUCCH resource set group and a second PUCCH resource set group, and each PUCCH resource set in each PUCCH resource set group includes a plurality of PUCCH resources.

That the transceiver module 2120 receives the codebook of the HARQ-ACK feedback information in the third time unit includes:

The processing module 2110 is further configured to: determine a first PUCCH resource set from the first PUCCH resource set group, where the first PUCCH resource set corresponds to a payload size of the to-be-received first sub-codebook; determine a first PUCCH resource from the first PUCCH resource set; generate an m1^{th} piece of DCI, where the m1^{th} piece of DCI includes first PUCCH resource indication information PRI, and the PRI is for determining the first PUCCH resource; determine a second PUCCH resource set from the second PUCCH resource set group, where the second PUCCH resource set corresponds to a payload size of the to-be-received second sub-codebook; and determine a second PUCCH resource from the second PUCCH resource set;
the processing module 2110 is further configured to generate an m2^{th} piece of DCI, where the m2^{th} piece of DCI includes second PUCCH resource indication information PRI, and the PRI is for determining the second PUCCH resource; and
the transceiver module 2120 is further configured to receive the first sub-codebook on the first PUCCH resource in the third time unit and receive the second sub-codebook on the second PUCCH resource in the third time unit.

In a specific implementation, optionally,
that the transceiver module 2120 is further configured to receive the first sub-codebook on the first PUCCH resource in the third time unit and receive the second sub-codebook on the second PUCCH resource in the third time unit includes:

The transceiver module 2120 is further configured to: when the first PUCCH resource and the second PUCCH resource do not overlap in time domain, receive the first sub-codebook on the first PUCCH resource in the third time unit and receive the second sub-codebook on the second PUCCH resource in the third time unit; or
the processing module 2110 is further configured to: when the first PUCCH resource and the second PUCCH resource overlap in time domain, determine a third physical uplink control channel PUCCH resource set from the plurality of PUCCH resource sets, the first PUCCH resource set group, the second PUCCH resource set group, or a third PUCCH resource set group based on a payload size of the to-be-received codebook, and determine a third PUCCH resource from the third PUCCH resource set based on PUCCH resource indication information PRI included in an m^{th} piece of DCI; and
the transceiver module 2120 is further configured to receive the codebook on the determined third PUCCH resource in the third time unit.

An embodiment of this application further provides a computer-readable storage medium. The computer-readable storage medium stores a computer program. When the computer program is executed by a computer, the computer may implement a procedure related to the terminal apparatus in the embodiments provided in the foregoing method embodiments.

An embodiment of this application further provides a computer-readable storage medium. The computer-readable storage medium is configured to store a computer program. When the computer program is executed by a computer, the computer may implement a procedure related to the access network device in the embodiments provided in the method embodiments.

An embodiment of this application further provides a computer program product. The computer program product is configured to store a computer program. When the computer program is executed by a computer, the computer may implement a procedure related to the terminal apparatus in the embodiments provided in the method embodiments.

An embodiment of this application further provides a computer program product. The computer program product is configured to store a computer program. When the computer program is executed by a computer, the computer may implement a procedure related to the access network device in the embodiments provided in the method embodiments.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium accessible by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of an instruction or a data structure and that can be accessed by a computer

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A method for transmitting automatic repeat request acknowledgement feedback information supporting a multicast service, comprising:
receiving N pieces of first downlink control information DCI and M pieces of second DCI in at least one first time unit, wherein the first DCI is first-type DCI, the second DCI is second-type DCI, each piece of first DCI comprises a first downlink assignment index DAI, the first DAI comprises a first counter downlink assignment index C-DAI, the first C-DAI indicates an accumulative quantity of pieces of first-type DCI for scheduling transmission of a downlink data channel, each piece of second DCI comprises a second downlink assignment index DAI, the second DAI comprises a second counter downlink assignment index C-DAI, and the second C-DAI indicates an accumulative quantity of pieces of second-type DCI for scheduling transmission of a downlink data channel;
receiving N first downlink data channels and M second downlink data channels in at least one second time unit, wherein the N first downlink data channels are scheduled by using the N pieces of first downlink control information, and the M second downlink data channels are scheduled by using the M pieces of second downlink control information;
generating a codebook of hybrid automatic repeat request acknowledgement HARQ-ACK feedback information based on the first DAIs in the N pieces of first DCI, the second DAIs in the M pieces of second DCI, the N first downlink data channels, and the M second downlink data channels, wherein the codebook comprises a first sub-codebook and a second sub-codebook, the first sub-codebook comprises HARQ-ACK feedback information for the N first downlink data channels, and the second sub-codebook comprises HARQ-ACK feedback information for the M second downlink data channels; and
sending the codebook in a third time unit.

2. The method according to claim 1, wherein
the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI; or
the first-type DCI is DCI for a multicast service, and the second-type DCI is DCI for a unicast service.

3. The method according to claim 1 or 2, wherein
the first-type DCI is sent in a first search space, and the second-type DCI is sent in a second search space different from the first search space;
the first-type DCI is sent in a common search space, and the second-type DCI is sent in a UE-specific search space; or
the first-type DCI is sent in a first control channel resource set, and the second-type DCI is sent in a second control channel resource set.

4. The method according to any one of claims 1 to 3, wherein
the first C-DAI indicates, up to a current serving cell and a current physical downlink control channel PDCCH monitoring occasion, an accumulative quantity of pieces of sent DCI for scheduling transmission of a physical downlink shared channel PDSCH and/or sent first-type DCI for indicating a semi-persistent scheduling SPS PDSCH release; and/or
the second C-DAI indicates, up to the current serving cell and the current physical downlink control channel PDCCH monitoring occasion, an accumulative quantity of pieces of sent DCI for scheduling transmission of a physical downlink shared channel PDSCH and/or sent second-type DCI for indicating a semi-persistent scheduling SPS PDSCH release.

5. The method according to claim 4, wherein a counting rule of the first C-DAI is first counting in ascending order of serving cell indexes, and then counting in ascending order of PDCCH monitoring occasions; and/or a counting rule of the second C-DAI is first counting in ascending order of the serving cell indexes, and then counting in ascending order of the PDCCH monitoring occasions.

6. The method according to any one of claims 1 to 5, wherein the first DAI further comprises a first total downlink assignment index T-DAI, and the first T-DAI indicates, up to the current physical downlink control channel PDCCH monitoring occasion, an accumulative quantity of pieces of sent DCI for scheduling the transmission of the physical downlink shared channel PDSCH and sent first-type DCI for indicating the semi-persistent scheduling SPS PDSCH release; and/or
the second DAI further comprises a second total downlink assignment index T-DAI, and the second T-DAI indicates, up to the current physical downlink control channel PDCCH monitoring occasion, an accumulative quantity of pieces of sent DCI for scheduling the transmission of the physical downlink shared channel PDSCH and sent second-type DCI for indicating the semi-persistent scheduling SPS PDSCH release.

7. The method according to any one of claims 1 to 6, wherein a sending occasion of the HARQ-ACK feedback information corresponding to the N first downlink data channels and the M second downlink data channels is the third time unit.

8. The method according to any one of claims 1 to 7, wherein the first sub-codebook comprises consecutive bits, and the second sub-codebook comprises consecutive bits.

9. The method according to any one of claims 1 to 8, wherein the generating a codebook of automatic repeat request acknowledgement HARQ-ACK feedback information based on the first DAIs in the N pieces of first DCI, the second DAIs in the M pieces of second DCI, the N first downlink data channels, and the M second downlink data channels comprises:
generating the first sub-codebook based on receiving statuses of the N first downlink data channels and the first DAIs in the N pieces of first DCI; and
generating the second sub-codebook based on receiving statuses of the M second downlink data channels and the second DAIs in the M pieces of second DCI.

10. The method according to any one of claims 1 to 9, wherein the first sub-codebook and the second sub-codebook are concatenated.

11. The method according to claim 10, wherein the first sub-codebook is before the second sub-codebook, or the first sub-codebook is after the second sub-codebook.

12. The method according to claim 10 or 11, wherein the sending the codebook in a third time unit comprises:
determining a first physical uplink control channel PUCCH resource set from a plurality of PUCCH resource sets based on a payload size of the codebook, wherein each of the plurality of PUCCH resource sets comprises at least one PUCCH resource;
determining a first PUCCH resource from the first PUCCH resource set based on a PUCCH resource indicator PRI comprised in an m^{th} piece of DCI; and
sending the codebook on the determined first PUCCH resource in the third time unit.

13. The method according to any one of claims 1 to 9, wherein the sending the codebook in a third time unit comprises:
determining a first physical uplink control channel PUCCH resource set from a plurality of PUCCH resource sets based on a payload size of the first sub-codebook, wherein each of the plurality of PUCCH resource sets comprises a plurality of PUCCH resources;
determining a second physical uplink control channel PUCCH resource set from the plurality of PUCCH resource sets based on a payload size of the second sub-codebook;
determining a first PUCCH resource from the first PUCCH resource set based on a PUCCH PRI comprised in an m1^{th} piece of received first DCI;
determining a second PUCCH resource from the second PUCCH resource set based on a PUCCH PRI comprised in an m2^{th} piece of received second DCI; and
sending the first sub-codebook on the determined first PUCCH resource in the third time unit and sending the second sub-codebook on the determined second PUCCH resource in the third time unit.

14. The method according to claim 13, wherein the sending the first sub-codebook on the determined first PUCCH resource in the third time unit and sending the second sub-codebook on the determined second PUCCH resource in the third time unit comprises:
when the first PUCCH resource and the second PUCCH resource do not overlap in time domain, sending the first sub-codebook on the determined first PUCCH resource in the third time unit and sending the second sub-codebook on the determined second PUCCH resource in the third time unit; or
when the first PUCCH resource and the second PUCCH resource overlap in time domain,
determining a third physical uplink control channel PUCCH resource set from the plurality of PUCCH resource sets based on a payload size of the codebook,
determining a third PUCCH resource from the third PUCCH resource set based on PUCCH resource indication information PRI comprised in an m^{th} piece of DCI, and
sending the codebook on the determined third PUCCH resource in the third time unit.

15. The method according to any one of claims 1 to 9, wherein
a plurality of physical uplink control channel PUCCH resource sets comprise a first PUCCH resource set group and a second PUCCH resource set group, and each PUCCH resource set in each PUCCH resource set group comprises a plurality of PUCCH resources; and
the sending the codebook in a third time unit comprises:
determining a first PUCCH resource set from the first PUCCH resource set group based on a payload size of the first sub-codebook;
determining a second PUCCH resource set from the second PUCCH resource set group based on a payload size of the second sub-codebook;
determining a first PUCCH resource from the first PUCCH resource set based on a PUCCH PRI comprised in an m1^{th} piece of received first DCI;
determining a second PUCCH resource from the second PUCCH resource set based on a PUCCH PRI comprised in an m2^{th} piece of received second DCI; and
sending the first sub-codebook on the determined first PUCCH resource in the third time unit and sending the second sub-codebook on the determined second PUCCH resource in the third time unit.

16. The method according to claim 15, wherein
a PUCCH resource in the first PUCCH resource set group is specially for feeding back the HARQ-ACK feedback information corresponding to the first downlink data channel scheduled by using the first-type DCI, and a PUCCH resource in the second PUCCH resource set group is specially for feeding back the HARQ-ACK feedback information corresponding to the second downlink data channel scheduled by using the second-type DCI;
a start symbol of each PUCCH resource in the first PUCCH resource set group in time domain is located before a start symbol of each PUCCH resource in the second PUCCH resource set group in time domain;
an end symbol of each PUCCH resource in the first PUCCH resource set group in time domain is located before an end symbol of each PUCCH resource in the second PUCCH resource set group in time domain;
a start symbol of each PUCCH resource in the first PUCCH resource set group in time domain is located before a first symbol, and a start symbol of each PUCCH resource in the second PUCCH resource set group in time domain is located after the first symbol; or
an end symbol of each PUCCH resource in the first PUCCH resource set group in time domain is located before a first symbol, and an end symbol of each PUCCH resource in the second PUCCH resource set group in time domain is located after the first symbol.

17. The method according to claim 15 or 16, wherein the sending the first sub-codebook on the determined first PUCCH resource in the third time unit and sending the second sub-codebook on the determined second PUCCH resource in the third time unit comprises:
when the first PUCCH resource and the second PUCCH resource do not overlap in time domain, sending the first sub-codebook on the determined first PUCCH resource in the third time unit and sending the second sub-codebook on the determined second PUCCH resource in the third time unit; or
when the first PUCCH resource and the second PUCCH resource overlap in time domain,
determining a third physical uplink control channel PUCCH resource set from the plurality of PUCCH resource sets, the first PUCCH resource set group, the second PUCCH resource set group, or a third PUCCH resource set group based on a payload size of the codebook,
determining a third PUCCH resource from the third PUCCH resource set based on PUCCH resource indication information PRI comprised in an m^{th} piece of DCI, and
sending the codebook on the determined third PUCCH resource in the third time unit.

18. The method according to claim 12, 14 or 17, wherein
the m^{th} piece of DCI is DCI corresponding to the last bit in all HARQ-ACK information bits in the codebook, or the m^{th} piece of DCI is last received DCI in the N pieces of first DCI and the M pieces of second DCI.

19. The method according to any one of claims 13 to 18, wherein
the m2^{th} piece of DCI is second DCI corresponding to the last HARQ-ACK information bit that is for the second downlink data channel and that is in the codebook, the m^{th} piece of DCI is last received second DCI, or the m^{th} piece of DCI is received second DCI that has a second C-DAI indicating a largest accumulative quantity of pieces of second-type DCI; or
the m1^{th} piece of DCI is first DCI corresponding to the last HARQ-ACK information bit that is for the first downlink data channel and that is in the codebook, the m^{th} piece of DCI is last received first DCI, or the m^{th} piece of DCI is received first DCI that has a first C-DAI indicating a largest accumulative quantity of pieces of first-type DCI.

20. A method for transmitting automatic repeat request acknowledgement feedback information supporting a multicast service, comprising:
sending N pieces of first downlink control information DCI and M pieces of second DCI in at least one first time unit, wherein the first DCI is first-type DCI, the second DCI is second-type DCI, each piece of first DCI comprises a first downlink assignment index DAI, the first DAI comprises a first counter downlink assignment index C-DAI, the first C-DAI indicates an accumulative quantity of pieces of first-type DCI for scheduling transmission of a downlink data channel, each piece of second DCI comprises a second downlink assignment index DAI, the second DAI comprises a second counter downlink assignment index C-DAI, and the second C-DAI indicates an accumulative quantity of pieces of second-type DCI for scheduling transmission of a downlink data channel;
sending N first downlink data channels and M second downlink data channels in at least one second time unit, wherein the N first downlink data channels are scheduled by using the N pieces of first downlink control information, and the M second downlink data channels are scheduled by using the M pieces of second downlink control information; and
receiving a codebook of automatic repeat request acknowledgement HARQ-ACK feedback information in a third time unit, wherein the codebook comprises a first sub-codebook and a second sub-codebook, the first sub-codebook comprises HARQ-ACK feedback information for the N first downlink data channels, and the second sub-codebook comprises HARQ-ACK feedback information for the M second downlink data channels.

21. The method according to claim 20, wherein
the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI; or
the first-type DCI is DCI for a multicast service, and the second-type DCI is DCI for a unicast service.

22. The method according to claim 20 or 21, wherein
the first-type DCI is sent in a first search space, and the second-type DCI is sent in a second search space different from the first search space;
the first-type DCI is sent in a common search space, and the second-type DCI is sent in a UE-specific search space; or
the first-type DCI is sent in a first control channel resource set, and the second-type DCI is sent in a second control channel resource set.

23. The method according to any one of claims 20 to 22, wherein
the first C-DAI indicates, up to a current serving cell and a current physical downlink control channel PDCCH monitoring occasion, an accumulative quantity of pieces of sent DCI for scheduling transmission of a physical downlink shared channel PDSCH and/or sent first-type DCI for indicating a semi-persistent scheduling SPS PDSCH release; and/or
the second C-DAI indicates, up to the current serving cell and the current physical downlink control channel PDCCH monitoring occasion, an accumulative quantity of pieces of sent DCI for scheduling transmission of a physical downlink shared channel PDSCH and/or sent second-type DCI for indicating a semi-persistent scheduling SPS PDSCH release.

24. The method according to claim 23, wherein a counting rule of the first C-DAI is first counting in ascending order of serving cell indexes, and then counting in ascending order of PDCCH monitoring occasions; and/or a counting rule of the second C-DAI is first counting in ascending order of the serving cell indexes, and then counting in ascending order of the PDCCH monitoring occasions.

25. The method according to any one of claims 20 to 24, wherein the first DAI further comprises a first total downlink assignment index T-DAI, and the first T-DAI indicates, up to the current physical downlink control channel PDCCH monitoring occasion, an accumulative quantity of pieces of sent DCI for scheduling the transmission of the physical downlink shared channel PDSCH and sent first-type DCI for indicating the semi-persistent scheduling SPS PDSCH release; and/or
the second DAI further comprises a second total downlink assignment index T-DAI, and the second T-DAI indicates, up to the current physical downlink control channel PDCCH monitoring occasion, an accumulative quantity of pieces of sent DCI for scheduling the transmission of the physical downlink shared channel PDSCH and sent second-type DCI for indicating the semi-persistent scheduling SPS PDSCH release.

26. The method according to any one of claims 20 to 25, wherein a sending occasion of the HARQ-ACK feedback information corresponding to the N first downlink data channels and the M second downlink data channels is the third time unit.

27. The method according to any one of claims 20 to 26, wherein the first sub-codebook comprises consecutive bits, and the second sub-codebook comprises consecutive bits.

28. The method according to any one of claims 20 to 27, wherein the first sub-codebook and the second sub-codebook are concatenated.

29. The method according to claim 28, wherein the first sub-codebook is before the second sub-codebook, or the first sub-codebook is after the second sub-codebook.

30. The method according to claim 28 or 29, wherein the method further comprises:
determining a first physical uplink control channel PUCCH resource set from a plurality of PUCCH resource sets, wherein each of the plurality of PUCCH resource sets comprises a plurality of PUCCH resources, and the first PUCCH resource set corresponds to a payload size of the to-be-received codebook;
determining a first PUCCH resource from the first PUCCH resource set; and
generating an m^{th} piece of DCI, wherein the m^{th} piece of DCI comprises PUCCH resource indication information PRI, and the PRI is for determining the first PUCCH resource; and
the receiving a codebook of automatic repeat request acknowledgement HARQ-ACK feedback information in a third time unit comprises:
receiving the codebook of the automatic repeat request acknowledgement HARQ-ACK feedback information on the first PUCCH resource in the third time unit.

31. The method according to any one of claims 20 to 27, wherein the method further comprises:
determining a first physical uplink control channel PUCCH resource set from a plurality of PUCCH resource sets, wherein each of the plurality of PUCCH resource sets comprises a plurality of PUCCH resources, and the first PUCCH resource set corresponds to a payload size of the to-be-received first sub-codebook;
determining a first PUCCH resource from the first PUCCH resource set; and
generating an m1^{th} piece of DCI, wherein the m1^{th} piece of DCI comprises first PUCCH resource indication information PRI, and the PRI is for determining the first PUCCH resource;
determining a second physical uplink control channel PUCCH resource set from the plurality of PUCCH resource sets, wherein the second PUCCH resource set corresponds to a payload size of the to-be-received second sub-codebook;
determining a second PUCCH resource from the second PUCCH resource set; and
generating an m2^{th} piece of DCI, wherein the m2^{th} piece of DCI comprises second PUCCH resource indication information PRI, and the PRI is for determining the second PUCCH resource; and
the receiving a codebook of automatic repeat request acknowledgement HARQ-ACK feedback information in a third time unit comprises:
receiving the first sub-codebook on the first PUCCH resource in the third time unit and receiving the second sub-codebook on the second PUCCH resource in the third time unit.

32. The method according to claim 31, wherein the receiving the first sub-codebook on the first PUCCH resource in the third time unit and receiving the second sub-codebook on the second PUCCH resource in the third time unit comprises:
when the first PUCCH resource and the second PUCCH resource do not overlap in time domain, receiving the first sub-codebook on the first PUCCH resource in the third time unit and receiving the second sub-codebook on the second PUCCH resource in the third time unit; or
when the first PUCCH resource and the second PUCCH resource overlap in time domain,
determining a third physical uplink control channel PUCCH resource set from the plurality of PUCCH resource sets based on a payload size of the to-be-received codebook,
determining a third PUCCH resource from the third PUCCH resource set based on PUCCH resource indication information PRI comprised in an m^{th} piece of DCI, and
receiving the codebook on the determined third PUCCH resource in the third time unit.

33. The method according to any one of claims 20 to 28, wherein
a plurality of physical uplink control channel PUCCH resource sets comprise a first PUCCH resource set group and a second PUCCH resource set group, and each PUCCH resource set in each PUCCH resource set group comprises a plurality of PUCCH resources; and
the receiving a codebook of HARQ-ACK feedback information in a third time unit comprises:
determining a first PUCCH resource set from the first PUCCH resource set group, wherein the first PUCCH resource set corresponds to a payload size of the to-be-received first sub-codebook;
determining a first PUCCH resource from the first PUCCH resource set;
generating an m1^{th} piece of DCI, wherein the m1^{th} piece of DCI comprises first PUCCH resource indication information PRI, and the PRI is for determining the first PUCCH resource;
determining a second PUCCH resource set from the second PUCCH resource set group, wherein the second PUCCH resource set corresponds to a payload size of the to-be-received second sub-codebook;
determining a second PUCCH resource from the second PUCCH resource set;
generating an m2^{th} piece of DCI, wherein the m2^{th} piece of DCI comprises second PUCCH resource indication information PRI, and the PRI is for determining the second PUCCH resource; and
receiving the first sub-codebook on the first PUCCH resource in the third time unit and receiving the second sub-codebook on the second PUCCH resource in the third time unit.

34. The method according to claim 33, wherein
a PUCCH resource in the first PUCCH resource set group is specially for feeding back the HARQ-ACK feedback information corresponding to the first downlink data channel scheduled by using the first-type DCI, and a PUCCH resource in the second PUCCH resource set group is specially for feeding back the HARQ-ACK feedback information corresponding to the second downlink data channel scheduled by using the second-type DCI;
a start symbol of each PUCCH resource in the first PUCCH resource set group in time domain is located before a start symbol of each PUCCH resource in the second PUCCH resource set group in time domain;
an end symbol of each PUCCH resource in the first PUCCH resource set group in time domain is located before an end symbol of each PUCCH resource in the second PUCCH resource set group in time domain;
a start symbol of each PUCCH resource in the first PUCCH resource set group in time domain is located before a first symbol, and a start symbol of each PUCCH resource in the second PUCCH resource set group in time domain is located after the first symbol; or
an end symbol of each PUCCH resource in the first PUCCH resource set group in time domain is located before a first symbol, and an end symbol of each PUCCH resource in the second PUCCH resource set group in time domain is located after the first symbol.

35. The method according to claim 33 or 34, wherein
the receiving the first sub-codebook on the first PUCCH resource in the third time unit and receiving the second sub-codebook on the second PUCCH resource in the third time unit comprises:
when the first PUCCH resource and the second PUCCH resource do not overlap in time domain, receiving the first sub-codebook on the first PUCCH resource in the third time unit and receiving the second sub-codebook on the second PUCCH resource in the third time unit; or
when the first PUCCH resource and the second PUCCH resource overlap in time domain,
determining a third physical uplink control channel PUCCH resource set from the plurality of PUCCH resource sets, the first PUCCH resource set group, the second PUCCH resource set group, or a third PUCCH resource set group based on a payload size of the to-be-received codebook,
determining a third PUCCH resource from the third PUCCH resource set based on PUCCH resource indication information PRI comprised in an m^{th} piece of DCI, and
receiving the codebook on the determined third PUCCH resource in the third time unit.

36. The method according to claim 31, 33 or 35, wherein
the m^{th} piece of DCI is DCI corresponding to the last bit in all HARQ-ACK information bits in the codebook, or the m^{th} piece of DCI is last received DCI in the N pieces of first DCI and the M pieces of second DCI.

37. The method according to any one of claims 32 to 36, wherein
the m2^{th} piece of DCI is second DCI corresponding to the last HARQ-ACK information bit that is for the second downlink data channel and that is in the codebook, the m^{th} piece of DCI is last received second DCI, or the m^{th} piece of DCI is received second DCI that has a second C-DAI indicating a largest accumulative quantity of pieces of second-type DCI; or
the m1^{th} piece of DCI is first DCI corresponding to the last HARQ-ACK information bit that is for the first downlink data channel and that is in the codebook, the m^{th} piece of DCI is last received first DCI, or the m^{th} piece of DCI is received first DCI that has a first C-DAI indicating a largest accumulative quantity of pieces of first-type DCI.

38. A communication apparatus, comprising a transceiver module and a processing module, wherein
the transceiver module is configured to receive N pieces of first downlink control information DCI and M pieces of second DCI in at least one first time unit, wherein the first DCI is first-type DCI, the second DCI is second-type DCI, each piece of first DCI comprises a first downlink assignment index DAI, the first DAI comprises a first counter downlink assignment index C-DAI, the first C-DAI indicates an accumulative quantity of pieces of first-type DCI for scheduling transmission of a downlink data channel, each piece of second DCI comprises a second downlink assignment index DAI, the second DAI comprises a second counter downlink assignment index C-DAI, and the second C-DAI indicates an accumulative quantity of pieces of second-type DCI for scheduling transmission of a downlink data channel;
the transceiver module is further configured to receive N first downlink data channels and M second downlink data channels in at least one second time unit, wherein the N first downlink data channels are scheduled by using the N pieces of first downlink control information, and the M second downlink data channels are scheduled by using the M pieces of second downlink control information;
the processing module is configured to generate a codebook of automatic repeat request acknowledgement HARQ-ACK feedback information based on the first DAIs in the N pieces of first DCI, the second DAIs in the M pieces of second DCI, the N first downlink data channels, and the M second downlink data channels, wherein the codebook comprises a first sub-codebook and a second sub-codebook, the first sub-codebook comprises HARQ-ACK feedback information for the N first downlink data channels, and the second sub-codebook comprises HARQ-ACK feedback information for the M second downlink data channels; and
the transceiver module is further configured to send the codebook in a third time unit.

39. The communication apparatus according to claim 38, wherein
the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI; or
the first-type DCI is DCI for a multicast service, and the second-type DCI is DCI for a unicast service.

40. The communication apparatus according to claim 38 or 39, wherein
the first-type DCI is sent in a first search space, and the second-type DCI is sent in a second search space different from the first search space;
the first-type DCI is sent in a common search space, and the second-type DCI is sent in a UE-specific search space; or
the first-type DCI is sent in a first control channel resource set, and the second-type DCI is sent in a second control channel resource set.

41. The communication apparatus according to any one of claims 38 to 40, wherein
the first C-DAI indicates, up to a current serving cell and a current physical downlink control channel PDCCH monitoring occasion, an accumulative quantity of pieces of sent DCI for scheduling transmission of a physical downlink shared channel PDSCH and/or sent first-type DCI for indicating a semi-persistent scheduling SPS PDSCH release; and/or
the second C-DAI indicates, up to the current serving cell and the current physical downlink control channel PDCCH monitoring occasion, an accumulative quantity of pieces of sent DCI for scheduling transmission of a physical downlink shared channel PDSCH and/or sent second-type DCI for indicating a semi-persistent scheduling SPS PDSCH release.

42. The communication apparatus according to claim 41, wherein a counting rule of the first C-DAI is first counting in ascending order of serving cell indexes, and then counting in ascending order of PDCCH monitoring occasions; and/or a counting rule of the second C-DAI is first counting in ascending order of the serving cell indexes, and then counting in ascending order of the PDCCH monitoring occasions.

43. The communication apparatus according to any one of claims 38 to 42, wherein the first DAI further comprises a first total downlink assignment index T-DAI, and the first T-DAI indicates, up to the current physical downlink control channel PDCCH monitoring occasion, an accumulative quantity of pieces of sent DCI for scheduling the transmission of the physical downlink shared channel PDSCH and sent first-type DCI for indicating the semi-persistent scheduling SPS PDSCH release; and/or
the second DAI further comprises a second total downlink assignment index T-DAI, and the second T-DAI indicates, up to the current physical downlink control channel PDCCH monitoring occasion, an accumulative quantity of pieces of sent DCI for scheduling the transmission of the physical downlink shared channel PDSCH and sent second-type DCI for indicating the semi-persistent scheduling SPS PDSCH release.

44. The communication apparatus according to any one of claims 38 to 43, wherein a sending occasion of the HARQ-ACK feedback information corresponding to the N first downlink data channels and the M second downlink data channels is the third time unit.

45. The communication apparatus according to any one of claims 38 to 44, wherein the first sub-codebook comprises consecutive bits, and the second sub-codebook comprises consecutive bits.

46. The communication apparatus according to any one of claims 38 to 45, wherein the generating a codebook of automatic repeat request acknowledgement HARQ-ACK feedback information based on the first DAIs in the N pieces of first DCI, the second DAIs in the M pieces of second DCI, the N first downlink data channels, and the M second downlink data channels comprises:
generating the first sub-codebook based on receiving statuses of the N first downlink data channels and the first DAIs in the N pieces of first DCI; and
generating the second sub-codebook based on receiving statuses of the M second downlink data channels and the second DAIs in the M pieces of second DCI.

47. The communication apparatus according to any one of claims 38 to 46, wherein the first sub-codebook and the second sub-codebook are concatenated.

48. The communication apparatus according to claim 47, wherein the first sub-codebook is before the second sub-codebook, or the first sub-codebook is after the second sub-codebook.

49. The communication apparatus according to claim 47 or 48, wherein
the processing module is further configured to: determine a first physical uplink control channel PUCCH resource set from a plurality of PUCCH resource sets based on a payload size of the codebook, wherein each of the plurality of PUCCH resource sets comprises at least one PUCCH resource; and determine a first PUCCH resource from the first PUCCH resource set based on PUCCH resource indication information PRI comprised in an m^{th} piece of DCI; and
that the transceiver module is configured to send the codebook in the third time unit comprises:
the transceiver module is configured to send the codebook on the determined first PUCCH resource in the third time unit.

50. The communication apparatus according to any one of claims 38 to 46, wherein
the processing module is further configured to: determine a first physical uplink control channel PUCCH resource set from a plurality of PUCCH resource sets based on a payload size of the first sub-codebook, wherein each of the plurality of PUCCH resource sets comprises a plurality of PUCCH resources; determine a second physical uplink control channel PUCCH resource set from the plurality of PUCCH resource sets based on a payload size of the second sub-codebook; determine a first PUCCH resource from the first PUCCH resource set based on a PUCCH PRI comprised in an m1^{th} received first DCI; and determine a second PUCCH resource from the second PUCCH resource set based on a PUCCH PRI comprised in an m2^{th} piece of received second DCI; and
that the transceiver module is configured to send the codebook in the third time unit comprises:
the transceiver module is configured to send the first sub-codebook on the determined first PUCCH resource in the third time unit and send the second sub-codebook on the determined second PUCCH resource in the third time unit.

51. The communication apparatus according to claim 50, wherein
that the transceiver module is configured to send the first sub-codebook on the determined first PUCCH resource in the third time unit and send the second sub-codebook on the determined second PUCCH resource in the third time unit comprises:
the transceiver module is configured to: when the first PUCCH resource and the second PUCCH resource do not overlap in time domain, send the first sub-codebook on the determined first PUCCH resource in the third time unit and send the second sub-codebook on the determined second PUCCH resource in the third time unit; or
the processing module is further configured to: when the first PUCCH resource and the second PUCCH resource overlap in time domain, determine a third physical uplink control channel PUCCH resource set from the plurality of PUCCH resource sets based on a payload size of the codebook, and determine a third PUCCH resource from the third PUCCH resource set based on PUCCH resource indication information PRI comprised in an m^{th} piece of DCI; and
the transceiver module is further configured to send the codebook on the determined third PUCCH resource in the third time unit.

52. The communication apparatus according to any one of claims 38 to 46, wherein
a plurality of physical uplink control channel PUCCH resource sets comprise a first PUCCH resource set group and a second PUCCH resource set group, and each PUCCH resource set in each PUCCH resource set group comprises a plurality of PUCCH resources;
the processing module is further configured to: determine a first PUCCH resource set from the first PUCCH resource set group based on a payload size of the first sub-codebook; determine a second PUCCH resource set from the second PUCCH resource set group based on a payload size of the second sub-codebook; determine a first PUCCH resource from the first PUCCH resource set based on a PUCCH PRI comprised in an m1^{th} received first DCI; and determine a second PUCCH resource from the second PUCCH resource set based on a PUCCH PRI comprised in an m2^{th} piece of received second DCI; and
that the transceiver module is configured to send the codebook in the third time unit comprises:
the transceiver module is configured to send the first sub-codebook on the determined first PUCCH resource in the third time unit and send the second sub-codebook on the determined second PUCCH resource in the third time unit.

53. The communication apparatus according to claim 52, wherein
a PUCCH resource in the first PUCCH resource set group is specially for feeding back the HARQ-ACK feedback information corresponding to the first downlink data channel scheduled by using the first-type DCI, and a PUCCH resource in the second PUCCH resource set group is specially for feeding back the HARQ-ACK feedback information corresponding to the second downlink data channel scheduled by using the second-type DCI;
a start symbol of each PUCCH resource in the first PUCCH resource set group in time domain is located before a start symbol of each PUCCH resource in the second PUCCH resource set group in time domain;
an end symbol of each PUCCH resource in the first PUCCH resource set group in time domain is located before an end symbol of each PUCCH resource in the second PUCCH resource set group in time domain;
a start symbol of each PUCCH resource in the first PUCCH resource set group in time domain is located before a first symbol, and a start symbol of each PUCCH resource in the second PUCCH resource set group in time domain is located after the first symbol; or
an end symbol of each PUCCH resource in the first PUCCH resource set group in time domain is located before a first symbol, and an end symbol of each PUCCH resource in the second PUCCH resource set group in time domain is located after the first symbol.

54. The communication apparatus according to claim 52 or 53, wherein
that the transceiver module is configured to send the first sub-codebook on the determined first PUCCH resource in the third time unit and send the second sub-codebook on the determined second PUCCH resource in the third time unit comprises:
the transceiver module is configured to: when the first PUCCH resource and the second PUCCH resource do not overlap in time domain, send the first sub-codebook on the determined first PUCCH resource in the third time unit and send the second sub-codebook on the determined second PUCCH resource in the third time unit; or
the processing module is configured to: when the first PUCCH resource and the second PUCCH resource overlap in time domain, determine a third physical uplink control channel PUCCH resource set from the plurality of PUCCH resource sets, the first PUCCH resource set group, the second PUCCH resource set group, or a third PUCCH resource set group based on a payload size of the codebook, and determine a third PUCCH resource from the third PUCCH resource set based on PUCCH resource indication information PRI comprised in an m^{th} piece of DCI; and
the transceiver module is further configured to send the codebook on the determined third PUCCH resource in the third time unit.

55. The communication apparatus according to claim 49, 51 or 54, wherein
the m^{th} piece of DCI is DCI corresponding to the last bit in all HARQ-ACK information bits in the codebook, or the m^{th} piece of DCI is last received DCI in the N pieces of first DCI and the M pieces of second DCI.

56. The communication apparatus according to any one of claims 50 to 55, wherein
the m2^{th} piece of DCI is second DCI corresponding to the last HARQ-ACK information bit that is for the second downlink data channel and that is in the codebook, the m^{th} piece of DCI is last received second DCI, or the m^{th} piece of DCI is received second DCI that has a second C-DAI indicating a largest accumulative quantity of pieces of second-type DCI; or
the m1^{th} piece of DCI is first DCI corresponding to the last HARQ-ACK information bit that is for the first downlink data channel and that is in the codebook, the m^{th} piece of DCI is last received first DCI, or the m^{th} piece of DCI is received first DCI that has a first C-DAI indicating a largest accumulative quantity of pieces of first-type DCI.

57. A communication apparatus, comprising a processing module and a transceiver module, wherein
the transceiver module is configured to send N pieces of first downlink control information DCI and M pieces of second DCI in at least one first time unit, wherein the first DCI is first-type DCI, the second DCI is second-type DCI, each piece of first DCI comprises a first downlink assignment index DAI, the first DAI comprises a first counter downlink assignment index C-DAI, the first C-DAI indicates an accumulative quantity of pieces of first-type DCI for scheduling transmission of a downlink data channel, each piece of second DCI comprises a second downlink assignment index DAI, the second DAI comprises a second counter downlink assignment index C-DAI, and the second C-DAI indicates an accumulative quantity of pieces of second-type DCI for scheduling transmission of a downlink data channel;
the transceiver module is further configured to send N first downlink data channels and M second downlink data channels in at least one second time unit, wherein the N first downlink data channels are scheduled by using the N pieces of first downlink control information, and the M second downlink data channels are scheduled by using the M pieces of second downlink control information;
the transceiver module is further configured to receive a codebook of automatic repeat request acknowledgement HARQ-ACK feedback information in a third time unit; and
the processing module is configured to determine the HARQ-ACK feedback information from the codebook, wherein the codebook comprises a first sub-codebook and a second sub-codebook, the first sub-codebook comprises HARQ-ACK feedback information for the N first downlink data channels, and the second sub-codebook comprises HARQ-ACK feedback information for the M second downlink data channels.

58. The communication apparatus according to claim 57, wherein
the first-type DCI is DCI whose cyclic redundancy check bit is scrambled by using a group radio network temporary identifier, and the second-type DCI is DCI whose cyclic redundancy check bit is scrambled by using a cell radio network temporary identifier, a modulation and coding scheme cell radio network temporary identifier, or a configured scheduling radio network temporary identifier CS-RNTI; or
the first-type DCI is DCI for a multicast service, and the second-type DCI is DCI for a unicast service.

59. The communication apparatus according to claim 57 or 58, wherein
the first-type DCI is sent in a first search space, and the second-type DCI is sent in a second search space different from the first search space;
the first-type DCI is sent in a common search space, and the second-type DCI is sent in a UE-specific search space; or
the first-type DCI is sent in a first control channel resource set, and the second-type DCI is sent in a second control channel resource set.

60. The communication apparatus according to any one of claims 57 to 59, wherein
the first C-DAI indicates, up to a current serving cell and a current physical downlink control channel PDCCH monitoring occasion, an accumulative quantity of pieces of sent DCI for scheduling transmission of a physical downlink shared channel PDSCH and/or sent first-type DCI for indicating a semi-persistent scheduling SPS PDSCH release; and/or
the second C-DAI indicates, up to the current serving cell and the current physical downlink control channel PDCCH monitoring occasion, an accumulative quantity of pieces of sent DCI for scheduling transmission of a physical downlink shared channel PDSCH and/or sent second-type DCI for indicating a semi-persistent scheduling SPS PDSCH release.

61. The communication apparatus according to claim 60, wherein a counting rule of the first C-DAI is first counting in ascending order of serving cell indexes, and then counting in ascending order of PDCCH monitoring occasions; and/or a counting rule of the second C-DAI is first counting in ascending order of the serving cell indexes, and then counting in ascending order of the PDCCH monitoring occasions.

62. The communication apparatus according to any one of claims 57 to 61, wherein the first DAI further comprises a first total downlink assignment index T-DAI, and the first T-DAI indicates, up to the current physical downlink control channel PDCCH monitoring occasion, an accumulative quantity of pieces of sent DCI for scheduling the transmission of the physical downlink shared channel PDSCH and sent first-type DCI for indicating the semi-persistent scheduling SPS PDSCH release; and/or
the second DAI further comprises a second total downlink assignment index T-DAI, and the second T-DAI indicates, up to the current physical downlink control channel PDCCH monitoring occasion, an accumulative quantity of pieces of sent DCI for scheduling the transmission of the physical downlink shared channel PDSCH and sent second-type DCI for indicating the semi-persistent scheduling SPS PDSCH release.

63. The communication apparatus according to any one of claims 57 to 62, wherein a sending occasion of the HARQ-ACK feedback information corresponding to the N first downlink data channels and the M second downlink data channels is the third time unit.

64. The communication apparatus according to any one of claims 57 to 63, wherein the first sub-codebook comprises consecutive bits, and the second sub-codebook comprises consecutive bits.

65. The communication apparatus according to any one of claims 57 to 64, wherein the first sub-codebook and the second sub-codebook are concatenated.

66. The communication apparatus according to claim 65, wherein the first sub-codebook is before the second sub-codebook, or the first sub-codebook is after the second sub-codebook.

67. The communication apparatus according to claim 65 or 66, wherein
the processing module is further configured to: determine a first physical uplink control channel PUCCH resource set from a plurality of PUCCH resource sets, wherein each of the plurality of PUCCH resource sets comprises a plurality of PUCCH resources, and the first PUCCH resource set corresponds to a payload size of the to-be-received codebook; determine a first PUCCH resource from the first PUCCH resource set; and generate an m^{th} piece of DCI, wherein the m^{th} piece of DCI comprises PUCCH resource indication information PRI, and the PRI is for determining the first PUCCH resource; and
that the transceiver module is configured to receive the codebook of the automatic repeat request acknowledgement HARQ-ACK feedback information in the third time unit comprises:
the transceiver module is configured to receive the codebook of the automatic repeat request acknowledgement HARQ-ACK feedback information on the first PUCCH resource in the third time unit.

68. The communication apparatus according to any one of claims 57 to 64, wherein
the processing module is further configured to: determine a first physical uplink control channel PUCCH resource set from a plurality of PUCCH resource sets, wherein each of the plurality of PUCCH resource sets comprises a plurality of PUCCH resources, and the first PUCCH resource set corresponds to a payload size of the to-be-received first sub-codebook; determine a first PUCCH resource from the first PUCCH resource set; generate an m1^{th} piece of DCI, wherein the m1^{th} piece of DCI comprises first PUCCH resource indication information PRI, and the PRI is for determining the first PUCCH resource; determine a second physical uplink control channel PUCCH resource set from the plurality of PUCCH resource sets, wherein the second PUCCH resource set corresponds to a payload size of the to-be-received second sub-codebook; determine a second PUCCH resource from the second PUCCH resource set; and generate an m2^{th} piece of DCI, wherein the m2^{th} piece of DCI comprises second PUCCH resource indication information PRI, and the PRI is for determining the second PUCCH resource; and
that the transceiver module is configured to receive the codebook of the automatic repeat request acknowledgement HARQ-ACK feedback information in the third time unit comprises:
the transceiver module is configured to receive the first sub-codebook on the first PUCCH resource in the third time unit and receive the second sub-codebook on the second PUCCH resource in the third time unit.

69. The communication apparatus according to claim 68, wherein
that the transceiver module is configured to receive the first sub-codebook on the first PUCCH resource in the third time unit and receive the second sub-codebook on the second PUCCH resource in the third time unit comprises:
the transceiver module is configured to: when the first PUCCH resource and the second PUCCH resource do not overlap in time domain, receive the first sub-codebook on the first PUCCH resource in the third time unit and receive the second sub-codebook on the second PUCCH resource in the third time unit; or
the processing module is further configured to: when the first PUCCH resource and the second PUCCH resource overlap in time domain, determine a third physical uplink control channel PUCCH resource set from the plurality of PUCCH resource sets based on a payload size of the to-be-received codebook, and determine a third PUCCH resource from the third PUCCH resource set based on PUCCH resource indication information PRI comprised in an m^{th} piece of DCI; and
the transceiver module is further configured to receive the codebook on the determined third PUCCH resource in the third time unit.

70. The communication apparatus according to any one of claims 57 to 65, wherein
a plurality of physical uplink control channel PUCCH resource sets comprise a first PUCCH resource set group and a second PUCCH resource set group, and each PUCCH resource set in each PUCCH resource set group comprises a plurality of PUCCH resources;
the processing module is further configured to: determine a first PUCCH resource set from the first PUCCH resource set group, wherein the first PUCCH resource set corresponds to a payload size of the to-be-received first sub-codebook; determine a first PUCCH resource from the first PUCCH resource set; generate an m1^{th} piece of DCI, wherein the m1^{th} piece of DCI comprises first PUCCH resource indication information PRI, and the PRI is for determining the first PUCCH resource; determine a second PUCCH resource set from the second PUCCH resource set group, wherein the second PUCCH resource set corresponds to a payload size of the to-be-received second sub-codebook; determine a second PUCCH resource from the second PUCCH resource set; and generate an m2^{th} piece of DCI, wherein the m2^{th} piece of DCI comprises second PUCCH resource indication information PRI, and the PRI is for determining the second PUCCH resource; and
that the transceiver module is configured to receive the codebook of the HARQ-ACK feedback information in the third time unit comprises:
the transceiver module is configured to receive the first sub-codebook on the first PUCCH resource in the third time unit and receive the second sub-codebook on the second PUCCH resource in the third time unit.

71. The communication apparatus according to claim 70, wherein
a PUCCH resource in the first PUCCH resource set group is specially for feeding back the HARQ-ACK feedback information corresponding to the first downlink data channel scheduled by using the first-type DCI, and a PUCCH resource in the second PUCCH resource set group is specially for feeding back the HARQ-ACK feedback information corresponding to the second downlink data channel scheduled by using the second-type DCI;
a start symbol of each PUCCH resource in the first PUCCH resource set group in time domain is located before a start symbol of each PUCCH resource in the second PUCCH resource set group in time domain;
an end symbol of each PUCCH resource in the first PUCCH resource set group in time domain is located before an end symbol of each PUCCH resource in the second PUCCH resource set group in time domain;
a start symbol of each PUCCH resource in the first PUCCH resource set group in time domain is located before a first symbol, and a start symbol of each PUCCH resource in the second PUCCH resource set group in time domain is located after the first symbol; or
an end symbol of each PUCCH resource in the first PUCCH resource set group in time domain is located before a first symbol, and an end symbol of each PUCCH resource in the second PUCCH resource set group in time domain is located after the first symbol.

72. The communication apparatus according to claim 70 or 71, wherein
that the transceiver module is configured to receive the first sub-codebook on the first PUCCH resource in the third time unit and receive the second sub-codebook on the second PUCCH resource in the third time unit comprises:
the transceiver module is configured to: when the first PUCCH resource and the second PUCCH resource do not overlap in time domain, receive the first sub-codebook on the first PUCCH resource in the third time unit and receive the second sub-codebook on the second PUCCH resource in the third time unit; or
the processing module is configured to: when the first PUCCH resource and the second PUCCH resource overlap in time domain, determine a third physical uplink control channel PUCCH resource set from the plurality of PUCCH resource sets, the first PUCCH resource set group, the second PUCCH resource set group, or a third PUCCH resource set group based on a payload size of the to-be-received codebook, and determine a third PUCCH resource from the third PUCCH resource set based on PUCCH resource indication information PRI comprised in an m^{th} piece of DCI; and
the transceiver module is further configured to receive the codebook on the determined third PUCCH resource in the third time unit.

73. The communication apparatus according to claim 68, 70 or 72, wherein
the m^{th} piece of DCI is DCI corresponding to the last bit in all HARQ-ACK information bits in the codebook, or the m^{th} piece of DCI is last received DCI in the N pieces of first DCI and the M pieces of second DCI.

74. The communication apparatus according to any one of claims 69 to 73, wherein
the m2^{th} piece of DCI is second DCI corresponding to the last HARQ-ACK information bit that is for the second downlink data channel and that is in the codebook, the m^{th} piece of DCI is last received second DCI, or the m^{th} piece of DCI is received second DCI that has a second C-DAI indicating a largest accumulative quantity of pieces of second-type DCI; or
the m1^{th} piece of DCI is first DCI corresponding to the last HARQ-ACK information bit that is for the first downlink data channel and that is in the codebook, the m^{th} piece of DCI is last received first DCI, or the m^{th} piece of DCI is received first DCI that has a first C-DAI indicating a largest accumulative quantity of pieces of first-type DCI.
